(19) Europäisches Patentamt
European Patent Office
Office européen des brevets

(11) EP 0 925 321 B1

(12) **FASCICULE DE BREVET EUROPEEN**

(45) Date de publication et mention de la délivrance du brevet:
**12.06.2002 Bulletin 2002/24**

(21) Numéro de dépôt: **97940225.2**

(22) Date de dépôt: **12.09.1997**

(51) Int Cl.[7]: **C08G 73/12**, C08G 59/40, C08G 18/67

(86) Numéro de dépôt international:
**PCT/FR97/01611**

(87) Numéro de publication internationale:
**WO 98/11151 (19.03.1998 Gazette 1998/11)**

(54) **PREPOLYMERES COMPORTANT DES FONCTIONS MALEIMIDE, LEUR PROCEDE DE FABRICATION ET LEURS APPLICATIONS**

PREPOLYMERE MIT MALEIMID-GRUPPEN, VERFAHREN ZU DEREN HERSTELLUNG UND DEREN VERWENDUNG

PREPOLYMERS CONTAINING MALEIMID FUNCTIONS, METHOD OF PRODUCING AND USE THEREOF

(84) Etats contractants désignés:
**AT BE CH DE DK ES FI FR GB IE IT LI NL PT SE**

(30) Priorité: **12.09.1996 FR 9611133**

(43) Date de publication de la demande:
**30.06.1999 Bulletin 1999/26**

(73) Titulaire: **CRAY VALLEY SA**
**92800 Puteaux (FR)**

(72) Inventeurs:
- **THEPOT, Philippe**
  **F-60140 Liancourt (FR)**
- **STRUB, Henri**
  **F-60700 Pont Sainte Maxence (FR)**

(74) Mandataire: **Chaillot, Geneviève**
**Cabinet CHAILLOT,**
**16-20, avenue de L'Agent Sarre,**
**B.P. 74**
**92703 Colombes Cédex (FR)**

(56) Documents cités:
**EP-A- 0 077 840**
**DE-A- 3 507 609**
**DE-A- 4 028 845**
**FR-A- 2 430 962**
**FR-A- 2 476 102**

Remarques:
Le dossier contient des informations techniques présentées postérieurement au dépôt de la demande et ne figurant pas dans le présent fascicule.

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 925 321 B1

Printed by Jouve, 75001 PARIS (FR)

## Description

La présente invention porte sur de nouveaux prépolymères comportant des fonctions maléimide, sur un procédé permettant de les fabriquer, ainsi que sur leurs applications comme constituants de compositions polymérisables et/ou réticulables.

On connaît de très nombreuses compositions thermodurcissables dans lesquelles entrent des maléimides monomères monofonctionnels ou polyfonctionnels, ces maléimides étant généralement recherchés parce qu'ils confèrent une bonne tenue thermique aux compositions thermodurcies.

Par ailleurs, il serait très intéressant de pouvoir disposer de composés portant des fonctions maléimide, et, plus particulièrement des maléimides aliphatiques, pour formuler des compositions durcissables par rayonnement, mettant en jeu à la fois des composés à doubles liaisons appauvries en électrons et des composés à doubles liaisons enrichies en électrons, ces composés porteurs de fonctions maléimide intervenant comme composés à doubles liaisons appauvries en électrons.

La synthèse des maléimides reste cependant très difficile, ce qui rend ces composés coûteux, et, en conséquence, ce qui rend coûteuses les compositions dans lesquelles ils entrent. Ceci est particulièrement vrai dans le cas des maléimides aliphatiques pour lesquels les rendements de synthèse obtenus sont très faibles.

On prépare généralement les maléimides par ouverture de l'anhydride maléique par une amine, formant un acide amique, dont la fermeture conduit à un maléimide. Cette fermeture s'effectue en général en présence d'anhydride acétique avec éventuellement un catalyseur : amine tertiaire et/ou sel métallique. Une fois la réaction de cyclisation effectuée, on précipite le maléimide par addition d'eau dans le milieu et on récupère le maléimide par filtration. L'excès d'eau provoque une précipitation de sous-produits de la réaction en même temps que celle du maléimide, ce qui nécessite une ou des étapes supplémentaires de recristallisation pour obtenir un composé pur. De plus, ce procédé conduit à la formation de quantités importantes d'effluents (acide acétique). Ces procédés sont donc coûteux et difficiles à mettre en oeuvre à l'échelle industrielle.

On peut également préparer des maléimides par réaction de l'anhydride maléique avec un isocyanate. Ce procédé, qui nécessite des purifications, est également coûteux et difficile à mettre en oeuvre à l'échelle industrielle.

On peut également souligner que les maléimides disponibles sur le marché (généralement aromatiques) ne sont guère solubles, ce qui empêche de les utiliser dans un certain nombre d'applications.

Par ailleurs, dans les compositions polymérisées, les maléimides introduits à l'état de monomères risquent, s'ils ne sont pas complètement polymérisés, de conduire à des problèmes de migration.

Afin de pallier aux inconvénients majeurs des maléimides monomères, à savoir leur coût élevé (dû à la complexité du procédé de fabrication et au faible rendement) et leur caractère insoluble, diverses approches ont été décrites dans la littérature.

Ont par exemple été décrits des polymères (polyesters, polyamides, polyimides) terminés par des groupements maléimide (voir par exemple, EP-A-311 735, EP-A-305 882; WO-A-92/17526 et EP-A-309 649). Pour former ces polymères, on utilise des maléimides monomères fonctionnalisés qui sont généralement des maléimides aromatiques, car ce sont ceux qui peuvent être synthétisés avec des rendements acceptables et donc à relativement moindre. coût. Les polymères résultants présentent les inconvénients d'être en pratique restreints à ceux terminés par des maléimides aromatiques, et de nécessiter un procédé de fabrication comportant plusieurs étapes, puisqu'il est nécessaire de synthétiser auparavant le maléimide qu'il faudra isoler, ce procédé étant donc coûteux et difficilement applicable à l'échelle industrielle.

FR-A-2 430 962 décrit une composition thermodurcissable comprenant (a) un mélange de produits de réaction à l'état fondu d'une diamine en excès molaire avec un anhydride insaturé (tel que l'anhydride maléique) et (b) un époxy ayant au moins deux fonctions époxy. Le mélange (a) qui comprend des composés imides (tels que maléimides) et amides (tels que maléamides) et la diamine résiduelle, ne peut réticuler par chauffage. Par ailleurs les composants de (a) ne sont pas des polymères. Quant à la composition (a) + (b), elle conduit à un polymère réticulé, insoluble, ne comportant plus d'insaturations de groupements maléimide et maléamide, et donc inutilisable dans des compositions polymérisables et/ou réticulables telles qu'envisagées par la présente invention.

La Société déposante a maintenant découvert que l'on pouvait obtenir des prépolymères comportant suffisamment de fonctions maléimide pour être directement utilisables dans les applications précitées, par un procédé qui ne fait appel à aucune purification, dans lequel tous les réactifs engagés entrent dans la composition des prépolymères finals, et dans lequel il n'est fait appel qu'à des opérations simples à mettre en oeuvre à l'échelle industrielle (entre autres, ne nécessitant pas d'opérations de cristallisation, filtration, etc., ni de mise au rebut d'effluents), autrement dit en s'affranchissant de toutes les difficultés de la technique antérieure et en offrant par ailleurs l'avantage de ne pas avoir à se restreindre aux maléimides N-substitués par des groupements aromatiques engagés dans ces prépolymères. De plus, le procédé conduit à des maléimides de nature polymérique qui ont l'avantage de présenter une faible aptitude à la migration dans la composition polymérisée.

La présente invention a donc d'abord pour objet des prépolymères comportant des fonctions maléimide (f) :

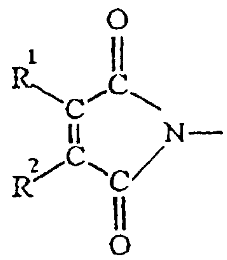

(f)

où $R^1$ et $R^2$ représentent chacun indépendamment H, alkyle en $C_1$-$C_{12}$ ou halogène, lesdits prépolymères consistant en les produits de réaction :

- d'au moins un anhydride maléique de formule (I) :

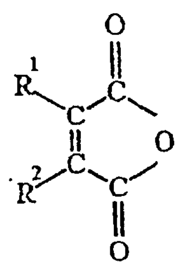

(I)

dans laquelle $R^1$ et $R^2$ sont tels que définis ci-dessus;

- d'au moins un composé (II) comportant une fonction $-NH_2$ et une ou plusieurs fonctions F, identiques ou différentes choisies parmi -OH, $-NH_2$, -NH-, -COOH,

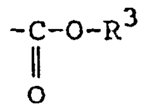

ou

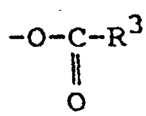

,

$R^3$ représentant un reste alkyle en $C_1$-$C_5$ ;

- d'au moins un composé (III) de formation de la chaîne des prépolymères par polycondensation et/ou polyaddition,

le(s) composé(s) (II) ayant d'abord réagi avec le ou les anhydrides maléiques (I) pour ouvrir les cycles anhydride maléique, avec formation de fonctions acide maléamique (f'):

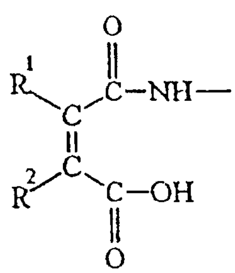

(f')

lesquelles ont été ensuite partiellement refermées sous l'action de la chaleur pour donner des maléimides N-substitués

par des groupements fonctionnalisés par une fonction F,
la chaîne desdits prépolymères ayant été formée par polycondensation et/ou polyaddition :

- du maléimide N-substitué formé portant la fonction F;
- du ou des composés (III) ;
- des produits non cyclisés portant ou non une fonction F formés en même temps que lesdits maléimides N-substitués ;
- du ou des anhydrides maléiques (I) ayant pu se trouver en excès après leur ouverture par le(s) composé(s) (II) ;

les fonctionnalités du ou des composé(s) (III) étant choisies pour permettre la constitution de la chaîne avec la fixation desdits maléimides N-substitués sur la chaîne directement par leur fonction F lorsque celle-ci est au moins l'une parmi -OH, $-NH_2$, -NH- et COOH, ou bien après transestérification des fonctions F lorsque celles-ci sont $-COOR^3$ ou $-OCOR^3$ pour permettre la condensation ou l'addition dudit maléimide N-substitué sur la chaîne, les fonctionnalités et proportions des composés (II) et (III) ayant été choisies de façon à exclure une gélification du milieu réactionnel.

Dans les prépolymères selon l'invention, le(s) composé(s) (II) a (ou ont) généralement réagi avec le (ou les) anhydride(s) (I) dans des conditions stoechiométriques ou sensiblement stoechiométriques ou en excès du (ou des) anhydride(s) (I) par rapport au(x) composé(s) (II).

De préférence, l'anhydride de formule (I) est l'anhydride maléique.

Les composés (II) sont notamment choisis parmi les composés des formules $H_2N$-A-OH, $H_2N$-A-COOH, $H_2N$-A-$COOR^3$,

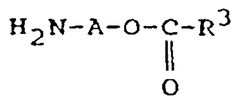

et $H_2N$-A-$NH_2$, dans lesquelles A représente un reste alkylène, linéaire, ramifié ou cyclique, ou un reste arylène, ces restes pouvant être interrompus par des atomes d'oxygène ou de soufre, ou par des groupements $-NR^4-$, $R^4$ représentant hydrogène ou alkyle.

A titre d'exemples de ces composé(s) (II), on peut citer :

- les aminoalcools, tels que l'éthanolamine, la propanolamine, l'isopropanolamine, le 2-(2-aminoéthoxy)-éthanol, la N-(2-aminoéthyl)éthanolamine;
- les aminoacides, tels que la valine, l'acide p-aminobenzoïque, l'alanine, l'acide 2-aminohexanoïque, l'acide 6-aminohexanoique, l'acide 7-aminoheptanoïque, l'acide 2-aminoisobutyrique ;
- les esters méthyliques ou éthyliques des aminoacides ci-dessus ;
- les esters des acides carboxyliques en $C_2$-$C_5$, tels que l'acide acétique, avec les aminoalcools ci-dessus ;
- les diamines, telles que l'éthylènediamine, la 2-méthyl-1,5-pentaméthylènediamine, l'hexaméthylènediamine, la 2,2,4- et/ou 2,4,4-triméthylhexaméthylènediamine, la dodécaméthylènediamine, la 5-méthylnonaméthylènediamine, la décaméthylènediamine, l'isophoronediamine, le bis(4-aminocyclohexyl)méthane, le bis(3-méthyl-4-aminocyclohexyl)méthane, le bis(3-méthyl-4-amino-5-éthylcyclohexyl)méthane, le 1,2-bis(4-aminocyclohexyl)éthane, le 2,2'-bis(4-aminocyclohexyl)propane, le 2,2'-bis(3-méthyl-4-aminocyclohexyl)propane, la 4,7-dioxadécane-1,10-diamine, la 4,9-dioxadodécane-1,12-diamine, la 4,7,10-trioxatridecane-1,13-diamine ; et
- les di- ou triamines polyoxyéthylénées et/ou polyoxypropylénées commercialisées sous la dénomination de Jeffamine®.

On peut également citer des composés (II) trifonctionnels tels que la L-sérine, l'acide 3-hydroxy 4-amino benzoïque et l'acide 3-amino 4-hydroxy benzoïque et d'autres triamines telles que la N-(2-aminoéthyl)-1,2-éthanediamine et la N-(3-aminopropyl)-1,3-propanediamine.

(1) Lorsque le maléimide N-substitué comporte une fonction F qui est -OH, $-NH_2$ ou -NH-, les composés (III) sont notamment :

- au moins un polyacide et/ou au moins un anhydride cyclique ; et
- au moins l'un parmi un polyol, un époxy mono- ou polyfonctionnel, une polyamine et un polyisocyanate ; ou

  - au moins un polyisocyanate ; et
  - éventuellement au moins l'un parmi un polyol, un époxy mono- ou polyfonctionnel, un polyacide et/ou un

anhydride cyclique et une polyamine.

(2) Lorsque le maléimide N-substitué comporte une fonction F qui est -COOH, les composés (III) sont notamment :

- au moins l'un parmi un polyol, un époxy mono- ou polyfonctionnel ou une polyamine ; et
- éventuellement un polyacide et/ou un anhydride cyclique ou un polyisocyanate ; ou

- au moins un polyisocyanate ; et
- éventuellement au moins l'un parmi un polyol, un époxy mono- ou polyfonctionnel, un polyacide et/ou un anhydride cyclique et une polyamine.

(3) Lorsque le maléimide N-substitué comporte une fonction F qui est

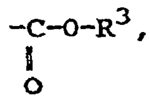

les composés (III) sont notamment :

- au moins un composé permettant la transestérification, comportant une fonction -OH et au moins une autre fonction choisie parmi -OH, -NH- et -COOH ; et
- dans le cas où cette autre fonction est -OH ou -NH-, les composés (III) tels que définis ci-dessus en (1) ; et
- dans le cas où cette autre fonction est -COOH, les composés (III) tels que définis ci-dessus en (2).

(4) Lorsque le maléimide N-substitué comporte une fonction F qui est

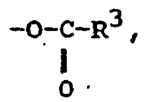

les composés (III) sont notamment :

- au moins un composé permettant la transestérification, comportant une fonction acide et au moins .une autre fonction choisie parmi -OH, -NH- et -COOH ; et
- dans le cas où cette autre fonction est -OH ou -NH-, les composés (III) tels que définis ci-dessus en (1) ; et
- dans le cas où cette autre fonction est -COOH, les composés (III) tels que définis ci-dessus en (2).

Les polyols en tant que composés (III) sont, de préférence, des diols ou des triols, des polyols de fonctionnalité supérieure (pentaérythritol par exemple, pouvant cependant être présents en petites quantités. Comme diols ou triols, on peut citer le propylène glycol, le dipropylène glycol, le diéthylène glycol, l'éthylène glycol, le 1,3-butanediol, le 1,4-butanediol, le néopentyl glycol, le triéthylène glycol, le tripropylène glycol, le butylène glycol, le glycérol, le triméthylol propane, le 1,6-hexane diol, le 1,4-cyclohexane diol, le 1,4-cyclohexanediméthanol, le 2-méthyl-1,3-propane diol, le 2-butyl-2-éthyl-1,3-propane diol, le 1,2-bis(hydroxyéthyl)cyclohexane, la 4'-(2-hydroxyethoxy)-2,2-dimehyl-2-hydroxyacétophénone, le 2,2-diméthyl-3-hydroxypropyl-2,2-diméthyl-3-hydroxy propionate et le dibromonéopentylglycol, ainsi que les polyéther polyols, les polyester polyols, les polyuréthane polyols de masse moléculaire moyenne en poids notamment comprise entre 200 et 1000. Des monoalcools peuvent éventuellement être ajoutés en petites quantités.

Les composés époxy en tant que composés (III) sont généralement des mono- et diépoxy parmi lesquels on peut citer l'épichlorhydrine, le 7-oxabicyclo[4.1.0]-heptane, le 3,4-époxycyclohexylméthyl 3,4-époxycyclohexane carboxylate, le diglycidyl éther de bisphénol A, le 1,2-époxyhexadécane, le 3,3,3-trichloropropylène oxyde et l'allyl glycidyl éther.

Les polyisocyanates en tant que composés (III) sont surtout des diisocyanates, tels que le 4,4'-diphénylméthane diisocyanate, le triméthylhexaméthylène diisocyanate, le toluène diisocyanate, l'isophoronediisocyanate, le tétraméthylène diisocyanate, le pentaméthylène diisocyanate, le 4,4'-dicyclohexylméthane diisocyanate, le 2,2,4-triméthyl-hexaméthylène-1,6-diisocyanate, le triphénylméthane-4,4',4''-triisocyanate, le polyméthylène polyphénylisocyanate, le m-phénylène diisocyanate, le p-phénylène diisocyanate, le 1,5-naphtalène diisocyanate, le naphtalène-1,4-diisocyanate, le diphénylène-4,4'-diisocyanate, le 3,3'-bi-tolylène-4,4'-diisocyanate, le 1,4-cyclohexylène diméthylène diisocyanate, le xylylène-1,4-diisocyanate, le xylyléne-1,3-diisocyanate, le cyclohexyl-1,4-diisocyanate et le 3,3'-diméthyldiphénylméthane-4,4'-diisocyanate, ainsi que les prépolymères de type polyurée ou polyuréthane à terminaisons isocyanate, généralement de faible masse moléculaire, tels que les condensats de polyols et/ou de polyamines avec un excès de polyisocyanate ; et les polyisocyanates qui contiennent, dans leur molécule, un cycle isocyanurate et les biurets à fonctions terminales isocyanate.

A titre d'illustration de polyisocyanates qui contiennent dans leur molécule le cycle isocyanurate, on peut citer les trimères de l'hexaméthylène diisocyanate commercialisés par la Société RHÔNE-POULENC sous la dénomination TOLONATE HDT, le tris [1-(isocyanatométhyl)-1,3,3-triméthylcyclohexane]isocyanurate commercialisé par la Société HUIS sous la dénomination VESTANAT T 1890/100.

A titre d'exemple de biurets, on peut citer le biuret du diisocyanato-1,6-hexane commercialisé par la Société BAYER sous la dénomination DESMODUR N100.

Comme exemples de polyacides en tant que composés (III), on peut citer principalement les diacides, tels que les acides maléique, fumarique, chloromaléique, citraconique, métaconique, itaconique, tétraconique, orthophtalique, isophtalique, téréphtalique, succinique, méthylsuccinique, adipique, sébacique, tétrabromophtalique, tétrachlorophtalique, glutarique, pimélique, pyromellitique ou similaires.

Les anhydrides cycliques en tant que composés (III), qui sont saturés ou insaturés, sont choisis parmi l'anhydride maléique, l'anhydride succinique, l'anhydride phtalique, l'anhydride trimellitique, l'anhydride pyromellitique, l'anhydride tétrahydrophtalique, l'anhydride hexahydrophtalique, les anhydrides chlorés tels que l'anhydride chlorendique, l'anhydride tétrachlorophtalique et l'anhydride tétrabromophtalique, l'anhydride méthyltétrahydrophtalique, l'anhydride nadique, l'anhydride méthyl nadique, l'anhydride itaconique, l'anhydride citraconique, et l'anhydride glutarique. On cite plus particulièrement l'anhydride maléique ou l'anhydride succinique. Un anhydride comportant un fragment photoinitiateur, tel que le dianhydride de l'acide 3,3',4,4'-benzophénonetétracarboxylique, peut être utilisé dans certaines applications.

Les polyamines en tant que composés (III) sont, de préférence, des diamines telles que l'éthylène diamine, la 2-méthyl-1,5-pentaméthylène diamine, la triméthylhexane-1,6-diamine, l'hexaméthylènediamine, la 2,2,4- et/ou 2,4,4-triméthylhexaméthylenediamine, la dodécaméthylènediamine, la triméthylhexaméthylènediamine, la 5-méthylnonaméthylènediamine, la décaméthylènediamine, l'isophoronediamine, le bis(4-aminocyclohexyl)méthane, le bis (3-méthyl-4-aminocyclohexyl)méthane, le bis(3-méthyl-4-amino-5-éthylcyclohexyl)-méthane, le 1,2-bis(4-aminocyclohexyl)éthane, le 2,2'-bis(4-aminocyclohexyl)-propane et le 2,2'-bis(3-méthyl-4-aminocyclohexyl)propane.

Des exemples de composés (III) permettant la transestérification, comportant un fonction OH et au moins une autre fonction choisie parmi -OH, -NH- et COOH, sont l'acide 2-hydroxybenzène acétique, l'acide parahydroxy benzoïque, l'acide métahydroxy benzoïque, l'acide 2-hydroxy 3-méthyl benzoïque, l'acide 2-hydroxy 4-méthyl benzoïque, l'acide 2-hydroxy 5-méthyl benzoïque, le 2-(butylamino)-éthanol, le 2-(cyclohexylamino)éthanol, le 2-(phénylamino)-éthanol, la 3-hydroxypipéridine, la 4-hydroxypipéridine, le dipropylène glycol, le tripropylène glycol, le triéthylène glycol, le 1,6-hexanediol, le 1,4-cyclohexanediol, le 1,4-cyclohexanediméthanol, le 2-butyl 2-éthyl 1,3-propanediol et le 1,2-bis(hydroxyéthyl)cyclohexane.

Des exemples de composés (III) permettant la transestérification, comportant une fonction acide et au moins une autre fonction choisie parmi -OH, -NH- et -COOH, sont l'acide 2-hydroxybenzène acétique, l'acide parahydroxy benzoïque, l'acide métahydroxy benzoïque, l'acide 2-hydroxy 3-méthyl benzoïque, l'acide 2-hydroxy 4-méthyl benzoïque, l'acide 2-hydroxy 5-méthyl benzoïque, la N-méthyl glycine, l'acide 2-méthylamino benzoïque, l'acide orthophtalique, l'acide téréphtalique, l'acide isophtalique, l'acide adipique, l'acide pimélique, l'acide sébacique, l'acide tétrabromophtalique et l'acide tétrachlorophtalique.

La masse moléculaire moyenne en nombre ($\overline{Mn}$) des prépolymères selon l'invention peut être comprise entre 350 et 5000, notamment entre 500 et 3000 (mesurée par GPC, étalon de polystyrène). Par ailleurs, lesdits prépolymères peuvent comporter 0,02 à 5 moles de groupements maléimide, notamment 0,05 à 2 moles de groupements maléimide, par kg de prépolymère.

En outre, après leur formation, les fonctions acides terminales des prépolymères selon la présente invention peuvent avoir réagi avec un composé monoépoxy pour régler l'indice d'acide desdits prépolymères, en particulier à une valeur inférieure à 5 mg KOH/g.

La présente invention porte également sur un procédé de fabrication des prépolymères tels que définis ci-dessus, caractérisé par le fait que l'on fait réagir au moins un composé (I), au moins un composé (II) et au moins un composé (III), lesdits composés (I), (II) et (III) étant tels que définis ci-dessus, dans des conditions permettant au(x) composé(s) (II) de réagir d'abord avec le (les) anhydride(s) maléique(s) (I) pour ouvrir les cycles anhydride maléique, des fonctions acide maléamique se formant par ouverture de ces cycles anhydride maléique par la fonction amine primaire du (ou des) composé(s) (II), puis étant refermées partiellement en cycles maléimide, par chauffage, les maléimides ainsi formés réagissant avec le ou les composés (III) et la chaîne dudit prépolymère étant formée par des réactions de polycondensation et/ou de polyaddition mettant en jeu le ou les composés (III) et/ou, dans le cas où il resterait de l'anhydride maléique en excès après ouverture de (I) par (II), ledit excès d'anhydride maléique (I), les

produits non cyclisés entrant également dans la composition de la chaîne, les fonctionnalités et proportions des composés (II) et (III) ayant été choisies de façon à exclure une gélification du milieu réactionnel.

Conformément à un premier mode de réalisation de la présente invention,

- dans une première étape, on fait réagir en milieu solvant polaire, dans des conditions stoechiométriques

ou sensiblement stoechiométriques, au moins un anhydride maléique (I) avec au moins un composé (II) pour ouvrir les cycles anhydride ;

- dans une deuxième étape, après évaporation dudit solvant polaire et, le cas échéant, après ajout au milieu réactionnel d'au moins un polyacide et/ou un anhydride cyclique en tant que composé (III), on conduit une réaction de cyclisation par chauffage du milieu réactionnel issu de la première étape, ladite cyclisation refermant partiellement les cycles anhydride maléique ouverts à l'étape précédente pour donner un produit de cyclisation partielle comportant, si l'on a opéré en l'absence d'anhydride cyclique (III), des maléimides N-substitués par des groupements fonctionnalisés, selon le(s) composé(s) (II) utilisé(s), par -OH ou -COOH ou

  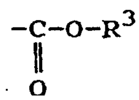 ou 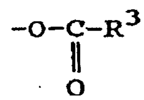

  ou $-NH_2$ ou -NH-, ou bien, si l'on a opéré en présence d'anhydride cyclique (III), des maléimides N-substitués par des groupements fonctionnalisés par -COOH ou, selon le composé (II) de départ, OH ou $NH_2$ ou NH ou

  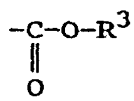 ou 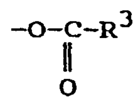

  avec formation du diacide correspondant audit anhydride cyclique (III), le cas échéant en mélange avec l'excès d'anhydride (III) ou (I) n'ayant pas réagi ; et
- dans une troisième étape, on engage ledit produit de cyclisation partielle dans une réaction de polycondensation et/ou de polyaddition avec au moins un composé (III) tel que défini ci-dessus.

· A la première étape, les cycles anhydride maléique sont ouverts par au moins une partie des fonctions $-NH_2$, -NH- ou OH du ou des composés (II), l'ouverture par les fonctions $-NH_2$ conduisant à des fonctions acide maléamique:

  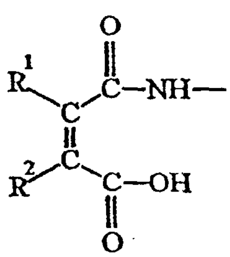 (f').

  Suivant le type de composé (II) utilisé, on peut obtenir l'ouverture d'un ou plusieurs cycles anhydride maléique par ledit composé (II). Les fonctions COOH ou $COOR^3$ ou $-OCOR^3$ de (II), le cas échéant présentes, restent libres.

  Cette première étape est généralement conduite à une température de 0 à 80°C, notamment de 0 à 20°C, pendant un laps de temps de 1 à 10 heures, notamment de 1 à 3 heures, dans un solvant polaire, tel que l'acétone, l'éthanol, le chloroforme, le dichlorométhane, le tétrahydrofuranne, la cyclohexanone, le dioxanne, la méthyléthylcétone et l'acétate d'éthyle.

· Avant de démarrer la deuxième étape (cyclisation au moins partielle), sauf si l'on garde le même solvant, on élimine généralement par évaporation le solvant polaire de la première étape, ce dernier pouvant être avantageusement recyclé. Ladite cyclisation est avantageusement conduite en présence d'au moins un catalyseur de cyclisation,

lequel est généralement choisi parmi les sels de métaux tels que le nitrate, le chlorure, le bromure, le sulfate et l'acétate de magnésium, le nitrate, le chlorure, le bromure et l'acétate de lithium, le nitrate, le chlorure et l'acétate de manganèse (II), le nitrate, le chlorure, le bromure, le sulfate et l'acétate de cobalt (II), ainsi que les sels de zinc de l'acide maléamique.

Dans le cas où la deuxième étape est conduite en présence d'anhydride cyclique [(III) et/ou un excès de (I)], on opère généralement à une température de 40 à 160°C, notamment de 80 à 120°C, pendant un laps de temps de 0,5 à 10 heures, notamment de 1 à 6 heures, dans un solvant aprotique, tel que le toluène et le xylène. On peut également travailler en l'absence de solvant, l'excès d'anhydride pouvant être considéré comme servant de solvant.

Dans le cas où la deuxième étape est conduite en l'absence d'anhydride, on opère généralement à une température de 40 à 160°C, notamment de 80 à 110°C, pendant un laps de temps de 0,5 à 10 heures, notamment de 3 à 7 heures, dans un solvant de l'acide amique obtenu à la première étape. on peut citer l'éthanol et le méthanol.

Le solvant qui serait utilisé à cette étape est ensuite généralement évaporé et peut également être avantageusement recyclé.

· Les réactions de polycondensation et/ou de polyaddition de la troisième étape sont des réactions classiques bien connues de l'homme du métier :

- Dans le cas d'une polycondensation avec au moins un polyol ou un époxy et, le cas échéant avec au moins un polyacide ou un anhydride, cette étape peut être conduite à une température de 150 à 250°C, le cas échéant en présence d'au moins un catalyseur d'estérification, tel que, par exemple, le titanate de tétrabutyle, le zirconate de tétrabutyle, le naphténate de zirconium, des mélanges d'oxalate d'étain et d'acétate de sodium, le chlorure stanneux, le chlorure stannique, l'oxyde de dibutylétain, l'hydroxyde de tributylétain et l'acide butyl stannoïque et, le cas échéant, en présence d'au moins un inhibiteur de polymérisation radicalaire, tel que l'hydroquinone et ses dérivés, tels que l'éther monométhylique de l'hydroquinone, la triméthyl-hydroquinone, la quinone et ses dérivés, tels que la toluhydroquinone, la monohydroquinone de tertiobutyle, le paratertiobutylcatéchol, la phénothiazine, les N,N-dialkylhydroxyamines, le nitrobenzène, le ditertiobutylcatéchol, la p-phénolaniline, le di-(2-éthylhexyl)-octylphényl phosphite, le 2,5-ditertiobutyl-4-hydroxytoluène, le naphténate de cuivre, le bleu de méthylène et leurs mélanges. Habituellement, le catalyseur ou le mélange de catalyseurs est présent à raison de 0,01 à 0,2% environ en poids du mélange réactionnel, et l'inhibiteur ou le mélange d'inhibiteurs est présent à raison de 0,01 à 0,2% environ en poids du mélange réactionnel. Le début de la réaction est généralement effectué à la pression atmosphérique, la fin étant conduite le cas échéant sous pression réduite.
- Dans le cas d'une réaction avec un polyisocyanate et, le cas échéant, avec au moins un polyacide et/ou un polyol et/ou un époxy, un anhydride pouvant être présent si un polyol est également présent, cette troisième étape peut être conduite à une température de 20 à 200°C, la réaction d'addition du polyacide avec le polyisocyanate pouvant être réalisée en présence d'un catalyseur, tel que la triéthylamine, la benzyldiméthylamine, le 1,4-diazabicyclo[2.2.2]octane, le cyanure de potassium ou de sodium, la réaction d'addition du polyol avec le polyisocyanate pouvant être réalisée en présence d'un catalyseur, tel que la triéthylamine, le naphténate de cobalt, le chlorure stanneux, le chlorure stannique, l'hydroxyde de tributylétain, l'oxyde de dibutylétain, le dilaurate de dibutylétain, le tétrabutylétain.
  Dans le cas où la deuxième étape est conduite en présence d'anhydride [(III) ou excès de (I)], on peut à la troisième étape ajouter un polyisocyanate et/ou un polyol, avec éventuellement un polyacide (III) ; dans le cas où la deuxième étape est conduite en l'absence d'anhydride, on peut à la troisième étape ajouter soit un polyisocyanate seul, soit un polyisocyanate et un polyol et/ou un polyacide.

S'il y a des réactions d'estérification (acide + alcool) et des réactions d'addition, les réactions d'estérification sont effectuées d'abord entre 150 et 250°C, puis les réactions d'addition (isocyanate + alcool ou acide), à des températures inférieures à 150°C.

Par ailleurs, dans une étape préliminaire, on peut protéger la double liaison

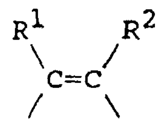

de l'anhydride (I) par réaction avec un agent protecteur choisi parmi le furane, les dérivés du furane, le cyclopentadiène, les dérivés du cyclopentadiène, le furane et le cyclopentadiène étant préférés, la déprotection ayant lieu à partir de la deuxième étape sous l'action de la chaleur.

Le procédé conforme à ce mode de réalisation est donc un procédé "one-pot", ne nécessitant pas d'isoler les produits réactionnels après chaque étape, la seule mesure à prendre le cas échéant après les première et seconde étapes étant l'évaporation du solvant.

Conformément à un second mode de réalisation du procédé selon la présente invention,

- dans une première étape, on fait réagir, en milieu solvant polaire, à une température de 20 à 150°C, notamment entre 80 et 130°C, au moins un anhydride maléique (I) avec au moins un composé (II), le(s) composé(s) (I) étant en excès stoechiométrique par rapport au(x) composé(s) (II), pour former un produit de cyclisation partielle comprenant des maléimides N-substitués fonctionnalisés par -COOH ou

  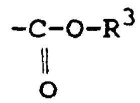 ou 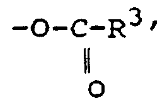

  des produits d'ouverture de(s) anhydride(s) (I), le diacide correspondant à 1' anhydride (I), le cas échéant en mélange avec l'excès d'anhydride (I) ; et

- dans une deuxième étape, on engage ledit produit de cyclisation partielle dans une réaction de polycondensation et/ou de polyaddition avec au moins un composé (III) tel que défini ci-dessus.

Conformément à un troisième mode de réalisation du procédé selon la présente invention, on fait réagir au moins un composé (I), au moins un composé (II) et au moins un composé (III) choisi parmi les polyols, les époxy et les polyamines, et éventuellement les polyacides et les anhydrides cycliques, en l'absence de solvant, avec un excès stoechiométrique du (ou des) composé(s) (I) par rapport au(x) compasé(s) (II), à une température de 180°C-200°C que l'on atteint par paliers ou directement ou progressivement, en éliminant le cas échéant l'eau de condensation, puis, le cas échéant, on porte le mélange à une température inférieure à 160°C, on ajoute au moins un polyisocyanate (III) et on conduit la réaction alcool/isocyanate à cette température.

Conformément à un quatrième mode de réalisation du procédé selon la présente invention, on fait réagir au moins un composé (I) et au moins un composé (II), avec un excès stoechiométrique du (ou des) composé(s) (I) par rapport au(x) composé(s) (II), en l'absence de solvant, à une température de 20-150°C pendant 1 à 3 heures, puis on ajoute au moins un composé (III) choisi parmi les polyols, les époxy et les polyamines, et éventuellement les polyacides et les anhydrides cycliques, et l'on porte le milieu réactionnel à une température de 180°C-200°C que l'on atteint par paliers ou directement ou progressivement, en éliminant le cas échéant l'eau de condensation, puis, le cas échéant, on porte le mélange à une température inférieure à 160°C, on ajoute au moins un polyisocyanate (III) et on conduit la réaction alcool/isocyanate à cette température.

Conformément à un cinquième mode de réalisation du procédé selon la présente invention, on fait réagir au moins un composé (I), au moins un composé (II), et comme composés (III), au moins un polyisocyanate et au moins un polyacide, et éventuellement au moins l'un parmi les polyols, les époxy et les polyamines, en l'absence de solvant, avec un excès stoechiométrique des (ou des) composé(s) (I) par rapport au(x) composé(s) (II), à une température inférieure à 160°C.

Les procédés conformes à ces deuxième à cinquième modes de réalisation sont également de type "one-pot".

Le cas échéant, une étape supplémentaire est effectuée afin de réduire l'indice d'acide de certains prépolymères à une valeur par exemple inférieure à 5 mg KOH/g par addition d'un monoépoxy dans des conditions bien connues de l'homme du métier, généralement à une température de l'ordre de 110 à 150°C, afin que ce monoépoxy réagisse avec les groupements carboxyliques résiduels du prépolymère.

La présente invention porte également sur des compositions polymérisables et/ou réticulables, comportant au moins un prépolymère tel que défini ci-dessus ou préparé par le procédé tel que défini ci-dessus. De telles compositions sont généralement polymérisables et/ou réticulables par voie radicalaire, les radicaux pouvant être générés par voie thermique et/ou par voie d'irradiation UV ou visible ou par voie de faisceau d'électrons.

Ainsi, les prépolymères selon l'invention peuvent entrer dans des compositions de moulage thermodurcissables ; de telles compositions, pouvant comporter en outre au moins un composé copolymérisable et les additifs usuels, tels que des charges, des fibres, des additifs anti-retrait, comportent au moins un initiateur de radicaux libres, tel qu'un composé diazo, un peroxyde, un hydroperoxyde, et, le cas échéant, un accélérateur de décomposition du peroxyde.

Les prépolymères selon l'invention peuvent également entrer dans des compositions de revêtement polymérisables par la lumière ultraviolette ou visible ou par un faisceau d'électrons ou par voie thermique. De telles compositions peuvent comporter aussi au moins l'un parmi un composé copolymérisable (tel que le styrène), un diluant réactif monomère ou oligomère, un solvant ou diluant non réactif, un additif usuel tel qu'un pigment. Dans les compositions polymérisables par UV, un photoinitiateur peut être présent. A titre d'exemples de photoinitiateurs, on peut citer :

- les $\alpha$-dicétones, comme le benzile et le diacétyle ;
- les acyloïnes, comme la benzoïne ;
- les acyloin éthers, comme le benzoïn méthyl éther, le benzoïn éthyl éther, le benzoïn isopropyl éther et le benzoïn isobutyl éther ;
- les thioxanthones, comme la thioxanthone, la 2,4-diéthylthioxanthone, l'acide thioxanthone-1-sulfonique, l'isopropyl-thioxanthone-4 sulfonique, l'isopropylthioxanthone et la 2-chlorothioxanthone ;
- les benzophénones, comme la benzophénone, la 4,4'-bis(diméthylamino)benzophénone, la 4,4'-bis(diéthylamino) benzophénone, la 4,4'-diéthylaminobenzophénone, la cétone de Mischler ;
- les propiophénones, comme la 2-hydroxy-2-méthylpropiophénone, la 4'-isopropyl-2-hydroxy-2-méthylpropiophénone ;
- les acétophénones, comme l'acétophénone, la p-diméthylaminoacétophénone, l'$\alpha$,$\alpha$'-diméthoxyacétoxyacétophénone, la 2,2-diméthoxy-2-phénylacétophénone, la p-méthoxyacétophénone, la 2-méthyl-[4-(méthylthio)phényl]-2-morpholino-1-propanone, la 2,2-diéthoxyacétophénone, la 4'-phénoxy-2,2-dichloroacétophénone, la 2-benzyl-2-N,N-diméthylamino-1-(4-morpholinophényl)-butanone-1, la 2,2-diméthoxy-2-phényl-acétophénone, la 2-hydroxy-2-méthyl-1-phénylpropanone ;
- les quinones, comme l'anthraquinone, la 2-éthylanthraquinone, la 2-chloroanthraquinone, la 1,4-naphtoquinone ;
- les alpha-hydroxyarylcétones, comme la 1-hydroxycyclohexyl phényl cétone ;
- les composés halogénés, tels que le chlorure de phénacyle, la tribromométhylphénylsulfone, la tris(trichlorométhyl)-s-triadine ;
- les peroxydes comme le peroxyde de di-t-butyle ; et
- d'autres composés comme le benzile diméthyl cétal ; le N,N-diméthylaminobenzoate d'isoamyle, le N,N-diméthylaminobenzoate d'éthyle, le benzoïn benzoate, la 2-hydroxy-2-méthyl-1-phényl propanone, l'$\alpha$-acyloxime ester.

Ces composés peuvent être utilisés soit individuellement en tant que photoinitiateur, soit sous la forme d'un mélange d'au moins deux d'entre eux en tant que système photoinitiateur. Par ailleurs, au photoinitiateur ou au système photoinitiateur, peut être associé au moins un agent photoactivateur.

La présente invention porte également sur les produits obtenus par polymérisation et/ou réticulation des compositions telles que définies ci-dessus.

Les formulations et les mises en oeuvre de ces compositions thermodurcissables et compositions de revêtement sont bien connues de l'homme du métier.

Les exemples suivants illustrent la présente invention sans toutefois en limiter la portée.

<u>Exemple de synthèse 1</u>

A une solution refroidie à 5°C d'anhydride maléique (1 mole) dans l'acétone (200 ml), on ajoute lentement 1 mole d'isopropanolamine. Après avoir agité le mélange pendant 2 h à température ambiante, on évapore l'acétone. On ajoute alors 600 ml de toluène et 4 moles d'anhydride maléique. On porte au reflux (110°C) pendant 4 h, puis on évapore le toluène. A 30 g du mélange obtenu, on ajoute 14,7 g de propylèneglycol, 200 ppm d'hydroquinone et 15 ppm de naphténate de cuivre. On chauffe dans un premier temps à 160°C, puis à 200°C, en éliminant l'eau de condensation, la fin de la réaction étant réalisée sous pression réduite. La réaction est arrêtée lorsqu'un indice d'acide de 60 mg KOH/g est atteint. La masse moléculaire moyenne en nombre du prépolymère résultant, déterminée par GPC (étalon polystyrène), est de 1875. Le prépolymère contient 0,36 mole de fonctions maléimide par kg de résine.

<u>Exemple de synthèse 2</u>

A une solution refroidie à 5°C d'anhydride maléique (19,6 g) dans l'acétone (30 ml), on ajoute lentement 15 g d'isopropanolamine. Après avoir agité le mélange pendant 2h à température ambiante, on évapore l'acétone. On ajoute alors 100 ml de toluènè, 78,4 g d'anhydride maléique et 0,7 g de chlorure de zinc. on porte au reflux pendant 3h puis on évapore le toluène. A 60 g du mélange obtenu, on ajoute 32,2 g de propylène glycol, 15 ppm de naphténate de cuivre et 200 ppm d'hydroquinone. On chauffe à 180-200°C en éliminant l'eau de condensation, la fin de la réaction étant conduite sous pression réduite. La réaction est arrêtée lorsqu'un indice d'acide de 49 mg KOH/g est atteint. La masse moyenne en nombre du prépolymère résultant, déterminée par GPC (étalon polystyrène) est de 1249. Le prépolymère contient 0,54 mole de fonctions maléimide par kg de résine.

Exemple de synthèse 3

A une solution refroidie à 5°C d'anhydride maléique (49 g) dans l'acétone (75 ml), on ajoute lentement 37,5 g d'isopropanolamine. Après avoir agité le mélange pendant 2h à température ambiante, on évapore l'acétone. On ajoute alors 250 ml de toluène, 196 g d'anhydride maléique et 8,2 g d'acétate de sodium. On porte au reflux pendant 4h puis on évapore le toluène. A 70 g du mélange obtenu, on ajoute 32,3 g de propylène glycol, 15 ppm de naphténate de cuivre et 200 ppm d'hydroquinone. On chauffe à 180-200°C en éliminant l'eau de condensation, la fin de la réaction étant conduite sous pression réduite. La réaction est arrêtée lorsqu'un indice d'acide de 49 mg KOH/g est atteint. La masse moyenne en nombre du prépolymère résultant, déterminée par GPC (étalon polystyrène) est de 1382.

Exemple de synthèse 4

A une solution à 5°C d'anhydride maléique (1 mole) dans 200 ml d'acétone, on additionne lentement une mole de furane, puis on agite 12 h à température ambiante. On ajoute alors de l'acétone pour solubiliser totalement le produit d'addition. A la solution refroidie à 5°C, on ajoute lentement 1 mole d'isopropanolamine. Après avoir agité le mélange pendant 2 h à température ambiante, on évapore l'acétone. On ajoute alors 600 ml de toluène et 4 moles d'anhydride maléique. On porte au reflux pendant 4 h, puis on évapore le solvant. A 30 g du mélange obtenu, on ajoute 15,2 g de propylène glycol, 200 ppm d'hydroquinone et 15 ppm de naphténate de cuivre. On chauffe dans un premier temps à 160°C, puis à 200°C en éliminant l'eau de condensation, la fin de la réaction étant réalisée sous pression réduite. La réaction est arrêtée lorsqu'un indice d'acide de 40 mg KOH/g est atteint. La masse moléculaire moyenne en nombre du prépolymère résultant, déterminée par GPC (étalon polystyrène), est de 1951.

Exemple de synthèse 5

La synthèse est conduite de la même manière que dans l'exemple de synthèse 1 pour les deux premières étapes. A 110 g du mélange obtenu après évaporation du toluène, on ajoute 84,6 g de diéthylène glycol, 15 ppm de naphténate de cuivre et 200 ppm d'hydroquinone. On chauffe alors à 180-200°C en éliminant l'eau de condensation, la fin de la réaction étant conduite sous pression réduite. La réaction est arrêtée lorsqu'un indice d'acide de 38 mg KOH/g est atteint. La masse moyenne en nombre du prépolymère résultant, déterminée par GPC (étalon polystyrène), est de 1362.

Exemple de Synthèse 6

A une solution d'anhydride maléique (0,6 mole) dans 170 ml de toluène, on ajoute 0,3 mole d'éthanolamine. La solution est chauffée pendant 2 h à 80°C. On ajoute alors 300 ml de toluène et 0, 9 mole d'anhydride maléique. On porte au reflux pendant 4 h et on évapore le solvant. On ajoute 1 mole de propylène glycol, 200 ppm d'hydroquinone et 15 ppm de naphténate de cuivre. On chauffe à 160°C puis à 200°C en éliminant l'eau de condensation, la fin de la réaction étant conduite sous pression réduite. La réaction est arrêtée lorsqu'un indice d'acide de 44 mg KOH/g est atteint. La masse moléculaire moyenne en nombre du prépolymère résultant, déterminée par GPC (étalon polystyrène) est de 1248.

Exemple de Synthèse 7 :

On dissout 1,4 mole d'anhydride maléique dans 300 ml de chloroforme à 60°C. On arrête le chauffage, on démarre l'addition goutte à goutte de la 2-méthyl-1,5-pentaméthylène diamine (0,7 mole) et on agite pendant 3 heures à température ambiante après que l'addition soit terminée. Le solvant est alors évaporé. A 0,07 mole du produit de réaction obtenu, on ajoute 0,21 mole d'anhydride maléique, 50 ml de toluène, on porte au reflux pendant 4 h puis on évapore le solvant. A 35 g du mélange obtenu, on ajoute 15,4 g de propylène glycol, 200 ppm d'hydroquinone et 15 ppm de naphténate de cuivre. On chauffe à 160°C puis à 200°C en éliminant l'eau de condensation, la fin de la réaction étant conduite sous pression réduite. La réaction est arrêtée lorsqu'un indice d'acide de 58 mg KOH/y est atteint. La masse moyenne en nombre du prépolymère résultant, déterminée par GPC (étalon polystyrène) est de 1308. Le prépolymère contient 1,20 mole de fonctions maléimide par kg de résine.

Exemple de synthèse 8

A une solution à 60°C de 117,1 g de valine dans 150 ml de THF, on ajoute lentement 98 g d'anhydride maléique

dissous dans 50 ml de THF. Après 7h d'agitation à 60°C, on évapore le solvant. A 20,3 g du mélange obtenu, on ajoute 27,7 g d'anhydride maléique, 150 ml de toluène, on porte au reflux pendant 4h puis on évapore le solvant. A 44,0 g du mélange obtenu, on ajoute 25,6 g de propylène glycol, 15 ppm de naphténate de cuivre et 200 ppm d'hydroquinone. On chauffe à 180-200°C en éliminant l'eau de condensation, la fin de la réaction étant conduite sous pression réduite. La réaction est arrêtée lorsqu'un indice d'acide de 36 mg KOH/g est atteint. La masse moyenne en nombre du prépolymère résultant, déterminée par GPC (étalon polystyrène), est de 1438.

Exemple de Synthèse 9

La synthèse est conduite de la même manière que dans l'Exemple de Synthèse 1 pour les deux premières étapes. A 300 g du mélange obtenu après évaporation du toluène, on ajoute 75 g de propylène glycol, 104,7 g de diéthylène glycol, 200 ppm d'hydroquinone et 15 ppm de naphténate de cuivre. On chauffe alors à 180°C puis à 200°C en éliminant l'eau de condensation, la fin de la réaction étant conduite sous pression réduite. La réaction est arrêtée lorsqu'un indice d'acide de 45 mg KOH/g est atteint. La masse moléculaire moyenne en nombre du prépolymère résultant, déterminée par GPC (étalon polystyrène) est de 2689.

Exemple de Synthèse 10

A une solution refroidie à 5°C d'anhydride maléique (0,26 mole) dans l'acétone (50 ml), on ajoute lentement 0,26 mole d'isopropanolamine. Après avoir agité le mélange pendant 2 h à température ambiante, on évapore l'acétone. On ajoute 150 ml de toluène et 1,04 mole d'anhydride succinique. On porte au reflux pendant 4 h puis on évapore le toluène. On ajoute 0,82 mole de propylène glycol, 200 ppm d'hydroquinone et 15 ppm de naphténate de cuivre. On chauffe à 160°C puis à 200°C en éliminant l'eau de condensation, la fin de la réaction étant conduite sous pression réduite. La réaction est arrêtée lorsqu'un indice d'acide de 60 mg KOH/g est atteint. La masse moléculaire moyenne en nombre du prépolymère résultant, déterminée par GPC (étalon polystyrène) est de 1166.

Exemple de Synthèse 11

A une solution refroidie à 5°C d'anhydride maléique (0,5 mole) dans 100 ml d'acétone, on additionne lentement 0,5 mole d'isopropanolamine. Après avoir agité le mélange pendant 2 heures à température ambiante, on évapore l'acétone. On ajoute alors 300 ml d'éthanol, on porte au reflux pendant 4 heures et on évapore l'éthanol. A 66 g du, produit obtenu, on ajoute 15,7 g d'anhydride maléique, 12,8 g de propylène glycol, 15 ppm de naphténate de cuivre et 200 ppm d'hydroquinone. On chauffe à 180-200°C en éliminant l'eau de condensation, la fin de la réaction étant conduite sous pression réduite. La réaction est arrêtée lorsqu'un indice d'acide de 40 mg KOH/g est atteint. La masse moyenne en nombre du prépolymère résultant, déterminée par GPC (étalon polystyrène) est de 1451.

Exemple de synthèse 12

A 18,4 g d'anhydride maléique à 65°C, on ajoute lentement 2,82 g d'isopropanolamine puis on porte à 100°C pendant 2h. On ajoute alors 11 g de propylène glycol, 15 ppm de naphténate de cuivre et 200 ppm d'hydroquinone et on chauffe à 180-200°C en éliminant l'eau de condensation, la fin de la réaction étant conduite sous pression réduite. La réaction est arrêtée lorsqu'un indice d'acide de 48 mg KOH/g est atteint. La masse moyenne en nombre du prépolymère résultant, déterminée par GPC (étalon polystyrène), est de 1857.

Exemple de synthèse 13

A 36,75 g d'anhydride maléique à 65°C, on ajoute lentement 5,63 g d'isopropanolamine. On porte le mélange à 80°C pendant 1h, à 100°C pendant 1h et à 120°C pendant 2h. On ajoute alors 20,8 g de propylène glycol, 15 ppm de naphténate de cuivre et 200 ppm d'hydroquinone et on chauffe à 180-200°C en éliminant l'eau de condensation, la fin de la réaction étant conduite sous pression réduite. La réaction est arrêtée lorsqu'un indice d'acide de 58 mg KOH/g est atteint. La masse moyenne en nombre du prépolymère résultant, déterminée par GPC (étalon polystyrène), est de 1313. Le prépolymère contient 0,49 mole de fonctions maléimide par kg de résine.

Exemple de synthèse 14

A 24,5 g d'anhydride maiéique à 65°C, on ajoute 15 ppm de naphténate de cuivre, 200 ppm d'hydroquinone puis lentement 3,75 g d'isopropanolamine. On porte à 80°C pendant 30 mn, à 100°C pendant 1h puis à 120°C pendant 1h. On ajoute alors 30,7 g de 2-butyl-2-éthyl-1,3-propanediol et on chauffe à 180-200°C en éliminant l'eau de condensation, la fin de la réaction étant conduite sous pression réduite. La réaction est arrétée lorsqu'un indice d'acide de 38 mg KOH/g est atteint. La masse moyenne en nombre du prépolymère résultant, déterminée par GPC (étalon polystyrène), est de 1555.

Exemple de synthèse 15

A 98 g d'anhydride maléique à 60°C, on ajoute lentement 15 g d'isopropanolamine. Lorsque l'addition est terminée, on chauffe pendant 2 h à 120°C. A 60,5 g du mélange obtenu, on ajoute 37 g de propylèneglycol, 15 ppm de naphténate de cuivre et 200 ppm d'hydroquinone. On chauffe à 180°C en éliminant l'eau de condensation, la fin de la réaction étant conduite sous pression réduite. La réaction est arrêtée lorsqu'un indice d'acide de 12 mg de KOH/g est atteint. A 23,7 g du polymère obtenu porté à 115°C, on ajoute 1,36 g de phényl glycidyl éther et 25 mg de chlorure de benzyltriéthylammonium. Après 2 h d'agitation à 130°C, le prépolymère présente un indice d'acide de 1,5 mg KOH/g.

Exemple de synthèse 16

A 31,3 g du prépolymère préparé à l'Exemple de synthèse 15 (présentant un indice d'acide de 12 mg KOH/g) on ajoute, à 105°C, 1,55 g d'allyl glycidyl éther. On monte progressivement la température de 105 à 140°C sur une durée de 2h45mn. Le prépolymère obtenu présente alors un indice d'acide de 2 mg KOH/g.

Exemple de Synthèse 17

A un mélange à 60°C d'anhydride maléique (24,5 g) et de propylène glycol (14,6 g) contenant 15 ppm de naphténate de cuivre et 200 ppm d'hydroquinone, on ajoute 3,75 g d'isopropanolamine. On chauffe alors à 160°C puis à 200°C en éliminant l'eau de condensation, la fin de la réaction étant conduite sous pression réduite. La réaction est arrêtée pour un indice d'acide de 45 mg KOH/g. La masse moyenne en nombre du prépolymère résultant, déterminée par GPC (étalon polystyrène) est de 1319. Le prépolymère contient 0,48 mole de fonctions maléimide par kg de résine.

Exemple de synthèse 18

A 98 g d'anhydride maléique à 60°C, on ajoute lentement 15 g d'isopropanolamine. On porte à 80°C pendant 30 mn, à 100°C pendant 30 mn puis à 120°C pendant 1h. A 111 g du mélange obtenu, on ajoute 108,3 g de propylèneglycol, 15 ppm de naphténate de cuivre et 200 ppm d'hydroquinone. On chauffe à 180-200°C en éliminant l'eau de condensation, la fin de la réaction étant conduite sous pression réduite. La réaction est arrêtée lorsqu'un indice d'acide de 24 mg KOH/g est atteint. A 30 g du mélange obtenu, on ajoute 3,5 g de triméthylhexaméthylène diisocyanate et on chauffe pendant 2 h à 70°C. La réaction est arrêtée lorsqu'un indice d'hydroxyle de 160 mg KOH/g est atteint. La masse moyenne en nombre du prépolymère résultant, déterminée par GPC (étalon polystyrène), est de 1534.

Exemple de synthèse 19

A 36,7 g d'anhydride maléique à 60°C, on ajoute lentement 4,58 g d'éthanolamine. Lorsque l'addition est terminée, on chauffe pendant 2 h à 120°C. On ajoute alors 24,88 g d'éthylène glycol, 200 ppm d'hydroquinone et 100 ppm d'un catalyseur d'estérification à base d'étain. On chauffe à 180°C en éliminant l'eau de condensation, la fin de la réaction étant conduite sous pression réduite. La réaction est arrêtée lorsqu'un indice d'acide de 2 mg de KOH/g est atteint. A 100 g du prépolymère obtenu porté à 140°C, on ajoute 1,5 équivalent par fonction acide carboxylique résiduel d'un époxy monofonctionnel ainsi qu'un catalyseur de la réaction époxy/acide carboxylique. Après 0,5 h à 140°C, on obtient un prépolymère présentant un indice d'acide inférieur à 0,5 mg KOH/g et une masse moyenne en nombre (déterminée par GPC, étalon polystyrène) de 1100. Le prépolymère contient 0,46 mole de fonctions maléimide par kg de résine.

Exemple de Synthèse 20

A une solution refroidie à 5°C d'anhydride maléique (1 mole) dans l'acétone (200 ml), on ajoute lentement 1 mole d'isopropanol amine. Après avoir agité le mélange pendant 2 h à température ambiante, on évapore l'acétone. On ajoute alors 600 ml de toluène et 4 moles d'anhydride maléique. On porte au reflux pendant 4 h puis on évapore le toluène. A 25 g du mélange obtenu, on ajoute 40,2 g de polyoxypropylène diamine, 20 ml de xylène, 300 ppm d'hydroquinone et on chauffe à 180°C en éliminant l'eau de condensation, la fin de la réaction étant conduite sous pression réduite. La réaction est arrêtée pour un indice d'acide de 69 mg KOH/g. La masse moyenne en nombre du prépolymère résultant, déterminée par GPC (étalon polystyrène) est de 1063.

Dans tous les exemples de synthèse 1 à 20, la RMN $^{13}C$ a permis de mettre en évidence la présence de groupements maléimide dans les prépolymères obtenus.

Exemple d'application 1 :

80 g du produit obtenu à l'Exemple de Synthèse 6 sont additionnés à 20 g de styrène et 2 g d'hydroperoxyde de cumène. On applique le mélange obtenu sur une plaque de verre à l'aide d'une barre "K hand coater" de manière à obtenir un film d'une épaisseur de 12 µm. Après traitement à 150°C pendant 30 minutes, puis 200°C pendant 3 heures, on obtient un film parfaitement réticulé qui présente une dureté crayon de 3H (dureté mesurée après 24 heures à température ambiante).

Exemple d'application 2 :

A 67 g du prépolymère obtenu à l'Exemple de synthèse 1, on ajoute 33 g de butanediol divinyl éther, 0,5 g de Darocure® 1173 et 0,5 g d'Irgacure® 184. On applique le mélange obtenu sur une plaque de verre à l'aide d'une barre "K hand coater" de manière à obtenir un film d'une épaisseur de 12 µm. On effectue le durcissement du film par la lumière ultraviolette, la lampe utilisée étant une lampe F450 (H-bulb), de puissance 120 W/cm, commercialisée par la Société FUSION. Un film présentant une dureté crayon de 4H est obtenu après 1 passage sous la lampe à 54 mètres/minute (dureté mesurée après 24 heures à température ambiante).

Exemple d'application 3 :

A 67,05 g du prépolymère obtenu à l'exemple de synthèse 1, on ajoute 32,95 g de butanediol divinyl éther. On applique et on réticule comme dans l'Exemple d'application 2. Un film présentant une dureté crayon de H est obtenu après 1 passage sous la lampe à 54 mètres/minute. 4 passages à 35 mètres/minute conduisent à une dureté de 3H (duretés mesurées après 24 heures à température ambiante).

**Revendications**

1. Prépolymères comportant des fonctions maléimide (f) :

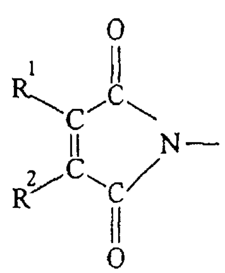

(f)

où $R^1$ et $R^2$ représentent chacun indépendamment H, alkyle en $C_1$-$C_{12}$ ou halogène, lesdits prépolymères consistant en les produits de réaction :

- d'au moins un composé de formule (I) :

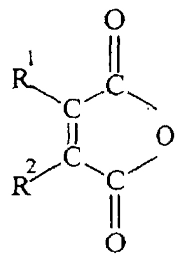

(I)

dans laquelle $R^1$ et $R^2$ sont tels que définis ci-dessus;

- d'au moins un composé (II) comportant une fonction $-NH_2$ et une ou plusieurs fonctions F, identiques ou différentes, choisies parmi -OH, $-NH_2$, -NH-, -COOH,

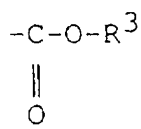 ou 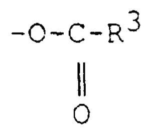,

$R^3$ représentant un reste alkyle en $C_1$-$C_5$ ;

- d'au moins un composé (III) de formation de la chaîne des prépolymères par polycondensation et/ou polyaddition,

le(s) composé(s) (II) ayant d'abord réagi avec le ou les composé(s) (I) pour ouvrir les cycles anhydride maléique correspondants, avec formation de fonctions acide maléamique correspondantes (f'):

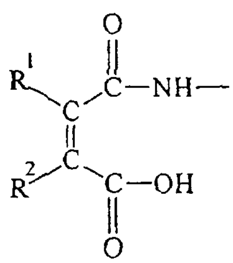

(f')

lesquelles ont été ensuite partiellement refermées sous l'action de la chaleur pour donner des maléimides correspondants N-substitués par des groupements fonctionnalisés par une fonction F,
la chaîne desdits prépolymères ayant été formée par polycondensation et/ou polyaddition :

- dudit maléimide N-substitué formé portant la fonction F ;
- du ou des composés (III) ;
- des produits non cyclisés portant ou non une fonction F formés en même temps que lesdits maléimides N-substitués ;
- du ou des composé(s) (I) ayant pu se trouver en excès après leur ouverture par le(s) composé(s) (II) ;

les fonctionnalités du ou des composé(s) (III) étant choisies pour permettre la constitution de la chaîne avec la fixation desdits maléimides N-substitués sur la chaîne directement par leur fonction F lorsque celle-ci est au moins l'une parmi -OH, $-NH_2$, -NH- et COOH, ou bien après transestérification des fonctions F lorsque celles-ci sont $-COOR^3$ ou $-OCOR^3$ pour permettre la condensation ou l'addition dudit maléimide N-substitué sur la chaîne,
les fonctionnalités et proportions des composés (II) et (III) ayant été choisies de façon à exclure une gélification du milieu réactionnel, la masse moléculaire moyenne en nombre ($\bar{Mn}$) du prépolymère obtenu étant comprise entre 350 et 5000.

**2.** Prépolymères selon la revendication 1, **caractérisés par le fait que** le(s) composé(s) (II) a (ont) réagi avec le(s) anhydride(s) (I) dans des conditions stoechiométriques ou en excès du (ou des) anhydride(s) (I) par rapport au(x) composés (II).

**3.** Prépolymères selon l'une des revendications 1 et 2, **caractérisés par le fait que** le composé de formule (I) est l'anhydride maléique.

**4.** Prépolymères selon l'une des revendications 1 à 3, **caractérisés par le fait que** le composé (II) est choisi parmi les composés des formules $H_2N$-A-OH, $H_2N$-A-COOH, $H_2N$-A-$COOR^3$,

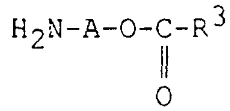

et $H_2N$-A-$NH_2$, dans lesquelles A représente un reste alkylène, linéaire, ramifié ou cyclique, ou un reste arylène, ces restes pouvant être interrompus par des atomes d'oxygène ou de soufre, ou par des groupements -$NR^4$-, $R^4$ représentant hydrogène ou alkyle.

**5.** Prépolymères selon la revendication 4, **caractérisés par le fait que** le composé (II) est choisi parmi les aminoalcools ; les aminoacides ; les esters méthyliques ou éthyliques des aminoacides ; les esters des acides carboxyliques en $C_2$-$C_5$ avec les aminoalcools ; les diamines ; les di- ou triamines polyoxyéthylénées et/ou polyoxypropylénées ; et le L-sérine, l'acide 3-hydroxy 4-amino benzoïque, l'acide 3-amino 4-hydroxy benzoïque, la N-(2-aminoéthyl)-1,2-éthanediamine et la N-(3-aminopropyl)-1,3-propanediamine.

**6.** Prépolymères selon l'une des revendication 1 à 5, **caractérisés par le fait que**, lorsque le maléimide N-substitué comporte une fonction F qui est -OH, -$NH_2$ ou -NH-, les composés (III) sont :

- au moins un polyisocyanate et, le cas échéant, au moins un polyacide et/ou anhydride cyclique ; et
- au moins un polyisocyanate et/ou au moins un polyacide et/ou anhydride cyclique, et au moins l'un parmi un polyol, un époxy mono- ou polyfonctionnel et une polyamine.

**7.** Prépolymères selon l'une des revendications 1 à 6, **caractérisés par le fait que**, lorsque le maléimide N-substitué comporte une fonction F qui est -COOH, les composés (III) sont :

- au moins l'un parmi un polyol, un époxy mono- ou polyfonctionnel ou une polyamine ; et
- éventuellement un polyacide et/ou un anhydride cyclique ou un polyisocyanate ; ou
- au moins un polyisocyanate ; et
- éventuellement au moins l'un parmi un polyol, un époxy mono- ou polyfonctionnel, un polyacide et/ou un anhydride cyclique et une polyamine.

**8.** Prépolymères selon l'une des revendications 1 à 7, **caractérisés par le fait que**, lorsque le maléimide N-substitué comporte une fonction F qui est

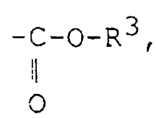

les composés (III) sont :

- au moins un composé permettant la transestérification, comportant une fonction -OH et au moins une autre fonction choisie parmi -OH, -NH- et -COOH ; et
- dans le cas où cette autre fonction est -OH ou -NH-, les composés (III) tels que définis à la revendication 6 ; et
- dans le cas où cette autre fonction est -COOH, les composés (III) tels que définis à la revendication 7.

**9.** Prépolymères selon l'une des revendications 1 à 8, **caractérisés par le fait que**, lorsque le maléimide N-substitué

comporte une fonction F qui est

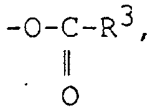

les composés (III) sont :

- au moins un composé permettant la transestérification, comportant une fonction acide et au moins une autre fonction choisie parmi -OH, -NH- et -COOH ; et
- dans le cas où cette autre fonction est -OH ou -NH-, les composés (III) tels que définis à la revendication 6 ; et
- dans le cas où cette autre fonction est -COOH, les composés (III) tels que définis à la revendication 7.

**10.** Prépolymères selon l'une des revendications 6 à 9, **caractérisés par le fait que** les polyols en tant que composés (III) sont choisis parmi le propylène glycol, le dipropylène glycol, le diéthylène glycol, l'éthylène glycol, le 1,3-butanediol, le 1,4-butanediol, le néopentyl glycol, le triéthylène glycol, le tripropylène glycol, le butylène glycol, le glycérol, le triméthylol propane, le 1,6-hexanediol, le 1,4-cyclohexane diol, le 1,4-cyclohexanediméthanol, le 2-méthyl-1,3-propane diol, le 2-butyl-2-éthyl-1,3-propane diol, le 1,2-bis(hydroxyéthyl)cyclohexane, la 4'-(2-hydroxyéthoxy)-2,2-diméthyl-2-hydroxyacétophénone, le 2,2-diméthyl-3-hydroxypropyl-2,2-diméthyl-3-hydroxy propionate et le dibromonéopentylglycol, ainsi que les polyéther polyols, les polyester polyols, les polyuréthane polyols de masse moléculaire moyenne en poids comprise entre 200 et 1000.

**11.** Prépolymères selon l'une des revendications 6 à 9, **caractérisés par le fait que** les composés époxy en tant que composés (III) sont choisis parmi l'épichlorhydrine, le 7-oxabicyclo[4.1.0]-heptane, le 3,4-époxycyclohexylméthyl 3,4-époxycyclohexane carboxylate, le diglycidyl éther de bisphénol A, le 1,2-époxyhexadécane, le 3,3,3-trichloropropylène oxyde et l'allyl glycidyl éther.

**12.** Prépolymères selon l'une des revendications 6 à 9, **caractérisés par le fait que** les polyisocyanates en tant que composés (III) sont choisis parmi le 4,4'-diphénylméthane diisocyanate, le triméthylhexaméthylène diisocyanate, le toluène diisocyanate, l'isophorone diisocyanate, le tétraméthylène diisocyanate, le pentaméthylène diisocyanate, le 4,4'-dicyclohexylméthane diisocyanate, le 2,2,4-triméthyl-hexaméthylène-1,6-diisocyanate, le triphénylméthane-4,4',4"-triisocyanate, le polyméthylène polyphénylisocyanate, le m-phénylène diisocyanate, le p-phénylène diisocyanate, le 1,5-naphtalène diisocyanate, le naphtalène-1,4-diisocyanate, le diphénylène-4,4'-diisocyanace, le 3,3'-bi-tolylène-4,4'-diisocyanate, le 1,4-cyclohexylène diméthylène diisocyanate, le xylylène-1,4-diisocyanate, le xylylène-1,3-diisocyanate, le cyclohexyl-1,4-diisocyanate et le 3,3'-diméthyldiphénylméthane-4,4'-diisocyanate, ainsi que les prépolymères de type polyurée ou polyuréthane à terminaisons isocyanate ; et les polyisocyanates qui contiennent, dans leur molécule, un cycle isocyanurate et les biurets à fonctions terminales isocyanate.

**13.** Prépolymères selon l'une des revendications 6 à 9, **caractérisés par le fait que** les polyacides en tant que composés (III) sont choisis parmi les acides maléique, fumarique, chloromaléique, citraconique, métaconique, itaconique, tétraconique, orthophtalique, isophtalique, téréphtalique, succinique, méthylsuccinique, adipique, sébacique, tétrabromophtalique, tétrachlorophtalique, glutarique, pimélique et pyromellitique.

**14.** Prépolymères selon l'une des revendications 6 à 9, **caractérisés par le fait que** les anhydrides cycliques en tant que composés (III) sont choisis parmi l'anhydride maléique, l'anhydride succinique, l'anhydride phtalique, l'anhydride trimellitique, l'anhydride pyromellitique, l'anhydride tétrahydrophtalique, l'anhydride hexahydrophtalique, les anhydrides chlorés, l'anhydride méthyltétrahydrophtalique, l'anhydride nadique, l'anhydride méthyl nadique, l'anhydride itaconique, l'anhydride citraconique, et l'anhydride glutarique.

**15.** Prépolymères selon l'une des revendications 6 à 9, **caractérisés par le fait que** les polyamines en tant que composés (III) sont choisies parmi l'éthylène diamine, la 2-méthyl-1,5-pentaméthylène diamine, la triméthylhexane-1,6-diamine, l'hexaméthylènediamine, la 2,2,4- et/ou 2,4,4-triméthylhexaméthylènediamine, la dodécaméthylènediamine, la triméthylhexaméthylènediamine, la 5-méthylnonaméthylène-diamine, la décaméthylènediamine, l'isophoronediamine, le bis(4-aminocyclohexyl)méthane, le bis(3-méthyl-4-aminocyclohexyl)méthane, le bis (3-méthyl-4-amino-5-éthylcyclohexyl)-méthane, le 1,2-bis(4-aminocyclohexyl)éthane, le 2,2'-bis(4-aminocyclohexyl)-propane et le 2,2'-bis(3-méthyl-4-aminocyclohexyl)propane.

**16.** Prépolymères selon l'une des revendications 6 à 9, **caractérisés par le fait que** les composés (III) permettant la transestérification, comportant un fonction OH et au moins une autre fonction choisie parmi -OH, -NH- et COOH, sont choisis parmi l'acide 2-hydroxybenzène acétique, l'acide parahydroxy benzoïque, l'acide métahydroxy benzoïque, l'acide 2-hydroxy 3-méthyl benzoïque, l'acide 2-hydroxy 4-méthyl benzoïque, l'acide 2-hydroxy 5-méthyl benzoïque, le 2-(butylamino)éthanol, le 2-(cyclohexylamino)éthanol, le 2-(phénylamino)éthanol, la 3-hydroxypipéridine, la 4-hydroxy-pipéridine, le dipropylène glycol, le tripropylène glycol, le triéthylène glycol, le 1,6-hexanediol, le 1,4-cyclohexanediol, le 1,4-cyclohexanediméthanol, le 2-butyl 2-éthyl 1,3-propanediol et le 1,2-bis(hydroxyéthyl)-cyclohexane.

**17.** Prépolymères selon l'une des revendications 6 à 9, **caractérisés par le fait que** les composés (III) permettant la transestérification, comportant une fonction acide et au moins une autre fonction choisie parmi -OH, -NH- et -COOH, sont choisis parmi l'acide 2-hydroxybenzène acétique, l'acide parahydroxy benzoïque, l'acide métahydroxy benzoïque, l'acide 2-hydroxy 3-méthyl benzoïque, l'acide 2-hydroxy 4-méthyl benzoïque, l'acide 2-hydroxy 5-méthyl benzoïque, la N-méthyl glycine, l'acide 2-méthylamino benzoïque, l'acide orthophtalique, l'acide téréphtalique, l'acide isophtalique, l'acide adipique, l'acide pimélique, l'acide sébacique, l'acide tétrabromophtalique et l'acide tétrachlorophtalique.

**18.** Prépolymères selon l'une des revendications 1 à 17, **caractérisés par le fait que** leur masse moléculaire moyenne en nombre ($\overline{Mn}$) est comprise entre 500 et 3000.

**19.** Prépolymères selon l'une des revendications 1 à 18, **caractérisés par le fait qu'**ils comportent 0,02 à 5 moles de groupements maléimide par kg de prépolymère.

**20.** Prépolymères selon l'une des revendications 1 à 19, **caractérisés par le fait qu'**après leur formation, leurs fonctions acides terminales ont réagi avec un composé monoépoxy pour régler leur indice d'acide.

**21.** Procédé de fabrication des prépolymères tels que définis à l'une des revendications 1 à 20, **caractérisé par le fait que** l'on fait réagir au moins un composé (I), au moins un composé (II) et au moins un composé (III), lesdits composés (I), (II) et (III) étant tels que définis à l'une des revendications 1 et 3 à 17, dans des conditions permettant au(x) composé(s) (II) de réagir d'abord avec le ou les composé(s) (I) pour ouvrir les cycles anhydride maléique correspondants, des fonctions acide maléamique correspondantes se formant par ouverture de ces cycles anhydride maléique par la fonction amine primaire du (ou des) composé(s) (II), puis étant refermées partiellement en cycles maléimide, par chauffage, les maléimides correspondants ainsi formés réagissant avec le ou les composés (III) et la chaîne dudit prépolymère étant formée par des réactions de polycondensation et/ou de polyaddition mettant en jeu le ou les composés (III) et/ou, dans le cas où il resterait du ou des composés (I) en excès apres ouverture de (I) par (II), ledit excès de composés (I), les produits non cyclisés entrant également dans la composition de la chaîne, les fonctionnalités et proportions des composés (II) et (III) ayant été choisies de façon à exclure une gélification du milieu réactionnel.

**22.** Procédé selon la revendication 21, **caractérisé par le fait que** :

- dans une première étape, on fait réagir en milieu solvant polaire, dans des conditions stoechiométriques, au moins un composé (I) avec au moins un composé (II) pour ouvrir les cycles anhydride ;

- dans une deuxième étape, après évaporation dudit solvant polaire et, le cas échéant, après ajout au milieu réactionnel d'au moins un polyacide et/ou un anhydride cyclique en tant que composé (III) on conduit une réaction de cyclisation par chauffage du milieu réactionnel issu de la première étape, ladite cyclisation refermant partiellement les cycles anhydride maléfique ouverts à l'étape précédente pour donner un produit de cyclisation partielle comportant, si l'on a opéré en l'absence d'anhydride cyclique (III), des maléimides N-substitués par des groupements fonctionnalisés, selon le(s) composé(s) (II) utilisé(s), par -OH ou -COOH ou

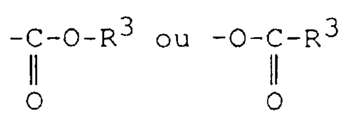

ou $-NH_2$ ou -NH-, ou bien, si l'on a opéré en présence d'anhydride cyclique (III), des maléimides N-substitués par des groupements fonctionnalisés par -COOH ou, selon le composé (II) de départ, OH ou $NH_2$ ou NH ou

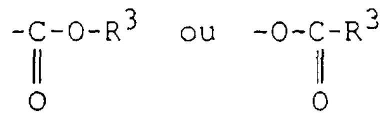

avec formation du diacide correspondant audit anhydride cyclique (III), le cas échéant en mélange avec l'excès d'anhydride (III) ou (I) n'ayant pas réagi ; et

- dans une troisième étape, on engage ledit produit de cyclisation partielle dans une réaction de polycondensation et/ou de polyaddition avec au moins un composé (III) tel que défini à l'une des revendications 1 et 6 à 17.

**23.** Procédé selon la revendication 22, **caractérisé par le fait qu'**on conduit la première étape à une température de 0 à 80°C, pendant un laps de temps de 1 à 10 heures, dans un solvant polaire.

**24.** Procédé selon l'une des revendications 22 et 23, **caractérisé par le fait qu'**on conduit la deuxième étape en présence d'anhydride cyclique, à une température de 40 à 160°C, pendant un laps de temps de 0,5 à 10 heures, le cas échéant dans un solvant aprotique et/ou en présence d'un catalyseur de cyclisation.

**25.** Procédé selon l'une des revendications 22 et 23, **caractérisé par le fait qu'**on conduit la deuxième étape en l'absence d'anhydride, à une température de 40 à 160°C, pendant un laps de temps de 0,5 à 10 heures, dans un solvant de l'acide amique obtenu à la première étape, et le cas échéant en présence d'un catalyseur de cyclisation.

**26.** Procédé selon l'une des revendications 22 à 25, **caractérisé par le fait que** dans le cas d'une polycondensation avec au moins un polyol ou un époxy, et le cas échéant avec au moins un polyacide ou un anhydride, on conduit la troisième étape à une température de 150 à 250°C, le cas échéant en présence d'au moins un catalyseur d'estérification et/ou d'au moins un inhibiteur de polymérisation radicalaire.

**27.** Procédé selon l'une des revendications 22 à 25, **caractérisé par le fait que**, dans le cas d'une réaction avec un polyisocyanate, et, le cas échéant, avec au moins un polyacide et/ou un polyol et/ou un époxy, un anhydride pouvant être présent si un polyol est également présent, on conduit la troisième étape à une température de 20 à 200°C, la réaction d'addition du polyacide ou du polyol avec le polyisocyanate pouvant être réalisée en présence d'un catalyseur.

**28.** Procédé selon l'une des revendications 22 à 27, **caractérisé par le fait que**, dans une étape préliminaire, on protège la double liaison

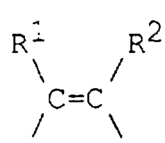

du composé (I) par réaction avec un agent protecteur choisi parmi le furane, les dérivés du furane, le cyclopentadiène et les dérivés de cyclopentadiène, la déprotection ayant lieu à partir de la deuxième étape sous l'action de la chaleur.

**29.** Procédé selon la revendication 21, **caractérisé par le fait que** :

- dans une première étape, on fait réagir, en milieu solvant polaire, à une température de 20-150°C, au moins un composé (I) avec au moins un composé (II), le(s) composé(s) (I) étant en excès stoechiométrique par rapport au(x) composé(s) (II), pour former un produit de cyclisation partielle comprenant des maléimides N-substitués fonctionnalisés par -COOH ou

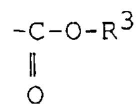 ou 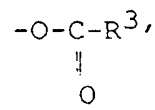

des produits d'ouverture de(s) composé(s) (I), le diacide correspondant au composé (I), le cas échéant en mélange avec l'excès de composé(I) ; et

- dans une deuxième étape, on engage ledit produit de cyclisation partielle dans une réaction de polycondensation et/ou de polyaddition avec au moins un composé (III) tel que défini à l'une des revendications 1 et 6 à 17.

**30.** Procédé selon la revendication 21, **caractérisé par le fait que** :

- on fait réagir au moins un composé (I), au moins un composé (II) et au moins un composé (III) choisi parmi les polyols, les époxy et les polyamines, et éventuellement les polyacides et les anhydrides cycliques, en l'absence de solvant, avec un excès stoechiométrique du (ou des) composé(s) (I) par rapport au(x) composé(s) (II), à une température de 180°C-200°C que l'on atteint par paliers ou directement ou progressivement, en éliminant le cas échéant l'eau de condensation, puis,
- le cas échéant, on porte le mélange à une température inférieure à 160°C, on ajoute au moins un polyisocyanate (III) et on conduit la réaction à cette température.

**31.** Procédé selon la revendication 21, **caractérisé par le fait que** :

- on fait réagir au moins un composé (I) et au moins un composé (II), avec un excès stoechiométrique du (ou des) composé(s) (I) par rapport au(x) composé(s) (II), en l'absence de solvant, à une température de 20-150°C pendant 1 à 3 heures, puis
- on ajoute au moins un composé (III) choisi parmi les polyols, les époxy et les polyamines, et éventuellement les polyacides et les anhydrides cycliques, et l'on porte le milieu réactionnel à une température de 180°C-200°C que l'on atteint par paliers ou directement ou progressivement, en éliminant le cas échéant l'eau de condensation, puis,
- le cas échéant, on porte le mélange à une température inférieure à 160°C, on ajoute au moins un polyisocyanate (III) et on conduit la réaction à cette température.

**32.** Procédé selon la revendication 21, **caractérisé par le fait qu'**on fait réagir au moins un composé (I), au moins un composé (II), et comme composés (III), au moins un polyisocyanate et au moins un polyacide, et éventuellement au moins l'un parmi les polyols, les époxy et les polyamines, en l'absence de solvant, avec un excès stoechiométrique des (ou des) composé(s) (I) par rapport au(x) composé(s) (II), à une température inférieure à 160°C.

**33.** Procédé selon l'une des revendications 21 à 32, **caractérisé par le fait qu'**on modifie le produit obtenu pour diminuer son indice d'acide, par réaction avec un monoépoxy, à une température de l'ordre de 110 à 150°C.

**34.** Compositions polymérisables et/ou réticulables, comportant au moins un prépolymère tel que défini à l'une des revendications 1 à 20 ou préparé par le procédé tel que défini à l'une des revendications 21 à 33.

**35.** Compositions polymérisables et/ou réticulables selon la revendication 34, **caractérisées par le fait qu'**elles sont polymérisables et/ou réticulables par voie radicalaire, les radicaux pouvant être générés par voie thermique et/ou par voie d'irradiation UV ou visible ou par voie de faisceau d'électrons.

**36.** Produits obtenus par polymérisation et/ou réticulation des compositions telles que définies à l'une des revendications 34 ou 35.

## Claims

**1.** Prepolymers comprising maleimide functional groups (f):

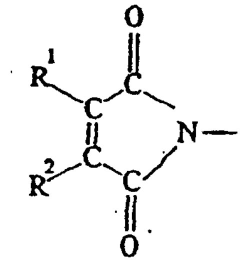

(f)

where $R^1$ and $R^2$ each independently represent H, $C_1$-$C_{12}$ alkyl or halogen, the said prepolymers consisting of the reaction products:

- of at least one compound of formula (I):

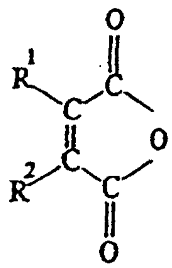

(I)

  in which $R^1$ and $R^2$ are as defined above;
- of at least one compound (II) comprising an $-NH_2$ functional group and one or more functional groups F, which are identical or different, chosen from -OH, $-NH_2$, -NH-, -COOH,

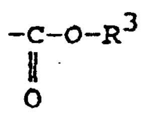

or

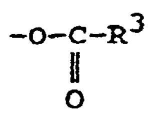

,

  $R^3$ representing a $C_1$-$C_5$ alkyl residue;
- of at least one compound (III) for formation of the chain of the prepolymers by polycondensation and/or polyaddition,

the compound(s) (II) having first reacted with the compound or compounds (I) in order to open the maleic anhydride rings, with formation of corresponding maleamic acid functional groups (f'):

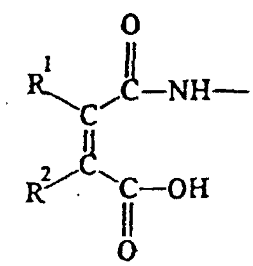

(f')

which were then partially closed under the effect of heat to give corresponding maleimides N-substituted by groups functionalized by an F functional group,

the chain of the said prepolymers having been formed by polycondensation and/or polyaddition:

- of the said N-substituted maleimide formed carrying the F functional group;
- of the compound or compounds (III);
- of the non-cyclized products, which may or may not carry an F functional group, formed at the same time as the said N-substituted maleimides;
- of the compound or compounds (I) which may have been present in excess after they have been opened by the compound(s) (II);

the functionalities of the compound(s) (III) being chosen in order to allow the formation. of the chain with the attachment of the said N-substituted maleimides to the chain directly via their F functional group, when latter is at least one from -OH, $-NH_2$, -NH- and -COOH, or else after transesterification of the F functional groups, when the latter are $-COOR^3$ or $-OCOR^3$, in order to allow the said N-substituted maleimide to condense with or add to the chain, the functionalities and proportions of the compounds (II) and (III) having been chosen so as to exclude gelling of the reaction mixture, the number-average molecular mass ($\overline{Mn}$) of the prepolymer obtained being between 350 and 5000.

2. Prepolymers according to Claim 1, **characterized in that** the compound(s) (II) has (have) reacted with the anhydride(s) (I) under stoichiometric conditions or in excess of the anhydride(s) (I) with respect to the compound(s) (II).

3. Prepolymers according to either of Claims 1 and 2, **characterized in that** the compound of formula (I) is maleic anhydride.

4. Prepolymers according to one of Claims 1 to 3, **characterized in that** the compound (II) is chosen from the compounds of formulae $H_2N-A-OH$, $H_2N-A-COOH$, $H_2N-A-COOR^3$,

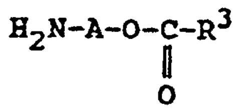

and $H_2N-A-NH_2$, in which A represents a linear, branched or cyclic alkylene residue or an arylene residue, it being possible for these residues to be interrupted by oxygen or sulphur atoms or by $-NR^4-$ groups, $R^4$ representing hydrogen or alkyl.

5. Prepolymers according to Claim 4, **characterized in that** the compound (II) is chosen from aminoalcohols, amino acids , methyl or ethyl esters of amino acids, esters of $C_2$-$C_5$ carboxylic acids with aminoalcohols, diamines, polyoxyethylenated and/or polyoxypropylenated di- or triamines and L-serine, 3-hydroxy-4-aminobenzoic acid, 3-amino-4-hydroxybenzoic acid, N-(2-aminoethyl)-1,2-ethanediamine and N-(3-aminopropyl)-1,3-propanediamine.

6. Prepolymers according to one of Claims 1 to 5, **characterized in that**, when the N-substituted maleimide comprises an F functional group which is -OH, $-NH_2$ or -NH-, the compounds (III) are:

- at least one polyisocyanate and, if appropriate, at least one polyacid and/or cyclic anhydride; and
- at least one polyisocyanate and/or at least one polyacid and/or cyclic anhydride, and at least one from a polyol, a mono- or polyfunctional epoxy and a polyamine.

7. Prepolymers according to one of Claims 1 to 6, **characterized in that**, when the N-substituted maleimide comprises an F functional group which is -COOH, the compounds (III) are:

- at least one from a polyol, a mono- or polyfunctional epoxy or a polyamine; and
- optionally a polyacid and/or a cyclic anhydride or a polyisocyanate; or
- at least one polyisocyanate; and
- optionally at least one from a polyol, a mono- or polyfunctional epoxy, a polyacid and/or a cyclic anhydride and a polyamine.

8. Prepolymers according to one of Claims 1 to 7, **characterized in that**, when the N-substituted maleimide comprises

an F functional group which is

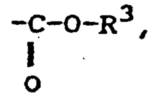

the compounds (III) are:

- at least one compound which makes possible transesterification, comprising a -OH functional group and at least one other functional group chosen from -OH, -NH- and -COOH; and
- in the case where this other functional group is -OH or -NH-, the compounds (III) as defined in Claim 6; and
- in the case where this other functional. group is -COOH, the compounds (III) as defined in Claim 7.

**9.** Prepolymers according to one of Claims 1 to 8, **characterized in that**, when the N-substituted maleimide comprises an F functional group which is

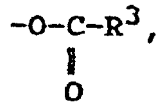

the compounds (III) are:

- at least one compound which makes possible transesterification, comprising. an acidic functional group and at least one other functional group chosen from -OH, -NH- and -COOH; and
- in the case where this other functional group is -OH or -NH-, the compounds (III) as defined in Claim 6; and
- in the case where this other functional group is -COOH, the compounds (III) as defined in Claim 7.

**10.** Prepolymers according to one of Claims 6 to 9, **characterized in that** the polyols as compounds (III) are chosen from propylene glycol, dipropylene glycol, diethylene glycol, ethylene glycol, 1,3-butanediol, 1,4-butanediol, neopentyl glycol, triethylene glycol, tripropylene glycol, butylene glycol, glycerol, trimethylolpropane, 1,6-hexanediol, 1,4-cyclohexanediol, 1,4-cyclohexanedimethanol, 2-methyl-1,3-propanediol, 2-butyl-2-ethyl-1,3-propanediol, 1,2-bis(hydroxyethyl)cyclohexane, 4'-(2-hydroxyethoxy)-2,2-dimethyl-2-hydroxyacetophenone, 2,2-dimethyl-3-hydroxypropyl 2,2-dimethyl-3-hydroxypropionate and dibromoneopentyl glycol, as well as polyetherpolyols, polyesterpolyols or polyurethanepolyols with a weight-average molecular mass of between 200 and 1000.

**11.** Prepolymers according to one of Claims 6 to 9, **characterized in that** the epoxy compounds as compounds (III) are chosen from epichlorohydrin, 7-oxabicyclo [4.1.0]heptane, 3,4-epoxycyclohexylmethyl 3,4-epoxycyclohexanecarboxylate, bisphenol A diglycidyl ether, 1,2-epoxyhexadecane, 3,3,3-trichloropropylene oxide and allyl glycidyl ether.

**12.** Prepolymers according to one of Claims 6 to 9, **characterized in that** the polyisocyanates as. compounds (III) are chosen from 4,4'-diphenylmethane diisocyanate, trimethylhexamethylene diisocyanate, toluene diisocyanate, isophorone diisocyanate, tetramethylene diisocyanate, pentamethylene diisocyanate, 4,4'-dicyclohexylmethane diisocyanate, 2,2,4-trimethylhexamethylene 1,6-diisocyanate, triphenylmethane 4,4',4''-triisocyanate, polymethylenepoly(phenylisocyanate), m-phenylene diisocyanate, p-phenylene diisocyanate, 1,5-naphthalene diisocyanate, naphthalene 1,4-diisocyanate, diphenylene 4,4'-diisocyanate, 3,3'-bitolylene 4,4'-diisocyanate, 1,4-cyclohexylenedimethylene diisocyanate, xylylene 1,4-diisocyanate, xylylene 1,3-diisocyanate, cyclohexylene 1,4-diisocyanate and 3,3'-dimethyldiphenylmethane 4,4'-diisocyanate, as well as prepolymers of polyurea or polyurethane type with isocyanate endings; and polyisocyanates which comprise an isocyanurate ring in their molecule and biurets with isocyanate terminal functional groups.

**13.** Prepolymers according to one of Claims 6 to 9, **characterized in that** the polyacids as compounds (III) are chosen from maleic, fumaric, chloromaleic, citraconic, metaconic, itaconic, tetraconic, orthophthalic, isophthalic, terephthalic, succinic, methylsuccinic, adipic, sebacic, tetrabromophthalic, tetrachlorophthalic, glutaric, pimelic and pyromellitic acids.

**14.** Prepolymers according to one of Claims 6 to 9, **characterized in that** the cyclic anhydrides as compounds (III) are chosen from maleic anhydride, succinic anhydride, phthalic anhydride, trimellitic anhydride, pyromellitic anhydride, tetrahydrophthalic anhydride, hexahydrophthalic anhydride, chlorinated anhydrides, methyltetrahydrophthalic anhydride, nadic anhydride, methylnadic anhydride, itaconic anhydride, citraconic anhydride and glutaric anhydride.

**15.** Prepolymers according to one of Claims 6 to 9, **characterized in that** the polyamines as compounds (III) are chosen from ethylenediamine, 2-methyl-1,5-pentamethylenediamine, trimethylhexane-1,6-diamine, hexamethylenediamine, 2,2,4- and/or 2,4,4-trimethylhexamethylenediamine, dodecamethylenediamine, trimethylhexamethylenediamine, 5-methylnonamethylenediamine, decamethylenediamine, isophoronediamine, bis-(4-aminocyclohexyl)methane, bis(3-methyl-4-aminocyclohexyl)methane, bis (3-methyl-4-amino-5-ethylcyclohexyl)-methane, 1,2-bis(4-aminocyclohexyl)ethane, 2,2'-bis(4-aminocyclohexyl)propane and 2,2'-bis(3-methyl-4-aminocyclohexyl) propane.

**16.** Prepolymers according to one of Claims 6 to 9, **characterized in that** the compounds (III) which make possible transesterification, comprising an -OH functional group and at least one other functional group chosen from -OH, -NH- and -COOH, are chosen from (2-hydroxybenzene)acetic acid, para-hydroxybenzoic acid, meta-hydroxybenzoic acid, 2-hydroxy-3-methylbenzoic acid, 2-hydroxy-4-methylbenzoic acid, 2-hydroxy-5-methylbenzoic acid, 2-(butylamino)ethanol, 2-(cyclohexylamino)ethanol, 2-(phenylamino)ethanol, 3-hydroxypiperidine, 4-hydroxypiperidine, dipropylene glycol, tripropylene glycol, triethylene glycol, 1,6-hexanediol, 1,4-cyclohexanediol, 1,4-cyclohexanedimethanol, 2-butyl-2-ethyl-1,3-propanediol and 1,2-bis(hydroxyethyl)cyclohexane.

**17.** Prepolymers according to one of Claims 6 to 9, **characterized in that** the compounds (III) which make possible transesterification, comprising an acidic functional group and at least one other functional group chosen from -OH, -NH- and -COOH, are (2-hydroxybenzene)acetic acid, para-hydroxybenzoic acid, meta-hydroxybenzoic acid, 2-hydroxy-3-methylbenzoic acid, 2-hydroxy-4-methylbenzoic acid, 2-hydroxy-5-methylbenzoic acid, N-methylglycine, 2-(methylamino)benzoic acid, orthophthalic acid, terephthalic acid, isophthalic acid, adipic acid, pimelic acid, sebacic acid, tetrabromophthalic acid and tetrachlorophthalic acid.

**18.** Prepolymers according to one of Claims 1 to 17, **characterized in that** their number-average molecular mass ($\overline{Mn}$) is between 500 and 3000.

**19.** Prepolymers according to one of Claims 1 to 18, **characterized in that** they comprise 0.02 to 5 mol of maleimide groups per kg of prepolymer.

**20.** Prepolymers according to one of Claims 1 to 19, **characterized in that**, after their formation, their terminal acidic functional groups are reacted with a monoepoxy compound in -order to adjust their acid number.

**21.** Process. for the manufacture of the prepolymers as defined in one of Claims 1 to 20, **characterized in that** at least one compound (I), at least one compound (II) and at least one compound (III), the said compounds (I), (II) and (III) being as defined in one of Claims 1 and-3 to 17, are reacted under conditions which allow the compound (s) (II) to react first with the compound(s) (I) in order to open the corresponding maleic anhydride rings, corresponding maleamic acid functional groups being formed by opening of these maleic anhydride rings by the primary amine functional group of the compound(s) (II) and then being partially reclosed to maleimide rings by heating, the corresponding maleimides thus formed reacting with the compound or compounds (III) and the chain of the said prepolymer being formed by polycondensation and/or polyaddition reactions involving the compound or compounds (III) and/or, in the case where excess compound or compounds (I) would remain after opening of (I) by (II), the said excess compounds (I), the non-cyclized products. also taking part in the composition of the chain, the functionalities and proportions of the compounds (II) and (III) having been chosen so as to exclude gelling of the reaction mixture.

**22.** Process according to Claim 21, **characterized in that**:

- in a first stage, at least one compound (I) is reacted in polar solvent medium, under stoichiometric conditions, with at least one compound (II), in order to open the anhydride rings;
- in a second stage, after evaporation of the said. polar solvent and, if appropriate, after addition to the reaction mixture of at least one polyacid and/or one cyclic anhydride as compound (III), a cyclization reaction is carried out by heating the reaction mixture resulting from the first stage, the said cyclization partially reclosing the

maleic anhydride rings opened in the preceding stage, in order to give a partial cyclization product. comprising, if the reaction has been carried out in the absence of cyclic anhydride (III), maleimides N-substituted by groups functionalized, depending on the compound(s) (II) used, by -OH or -COOH or

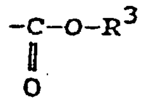 or 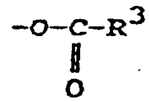

or $-NH_2$ or -NH-, or else, if the reaction has been carried. out in the presence of cyclic anhydride (III), maleimides N-substituted by groups functionalized by -COOH or, depending on the starting compound (II), -OH or $-NH_2$ or -NH- or

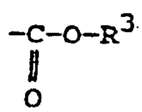 or 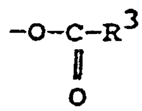

with formation of the diacid corresponding to the said cyclic anhydride (III), if appropriate as a mixture with the excess anhydride (III) or (I) which has not reacted; and

- in a third stage, the said partial cyclization product is used in a polycondensation and/or polyaddition reaction with at least one compound (III) as defined in one of Claims 1 and 6 to 17.

**23.** Process according to Claim 22, **characterized in that** the first stage is carried out at a temperature of 0 to 80°C for a period of time of 1 to 10 hours in a polar solvent.

**24.** Process according to either of Claims 22 and 23, **characterized in that** the second stage is carried out in the presence of cyclic anhydride at a temperature of 40 to 160°C for a period of time of 0.5 to 10 hours, if appropriate in an aprotic solvent and/or in the presence of a cyclization catalyst.

**25.** Process according to either of Claims 22 and 23, **characterized in that** the second stage is carried out in the absence of anhydride at a temperature of 40 to 160°C for a period of time of 0.5 to 10 hours in a solvent of the amic acid obtained in the first stage and if appropriate in the presence of a cyclization catalyst.

**26.** Process according to one of Claims 22 to 25, **characterized in that**, in the case of a polycondensation with at least one polyol or- one epoxy and, if appropriate, with at least one polyacid or one anhydride, the third stage is carried out at a temperature of 150 to 250°C, if appropriate in the presence of at least one esterification catalyst and/or of at least one radical polymerization inhibitor.

**27.** Process according to one of Claims 22 to 25, **characterized in that**, in the case of a reaction with a polyisocyanate and, if appropriate, with at least one polyacid and/or one polyol and/or one epoxy, it being possible for an anhydride to be present if a polyol is also present, the third stage is carried out at a temperature of 20 to 200°C, it being possible for the addition reaction of the polyacid or polyol with the polyisocyanate to be carried out in the presence of a catalyst.

**28.** Process according to one of Claims 22 to 27, **characterized in that**, in a preliminary stage, the

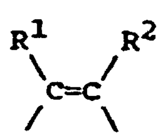

double bond of the compound (I) is protected by reaction with a protective agent chosen from furan, furan derivatives, cyclopentadiene and cyclopentadiene derivatives, deprotection taking place from the second stage under the effect of heat.

**29.** Process according to Claim 21, **characterized in that**:

- in a first stage, at least one compound(I) is reacted in polar solvent medium at atemperature of 20-150°C with at least one compound (II), the compound(s) (I) being in stoichiometric excess with respect to the compound (s) (II), in order to form a partial cyclization product comprising N-substituted maleimides functionalized by -COOH or

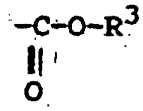

or

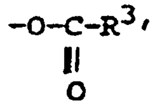

products from the opening of anhydride(s) (I) or the diacid corresponding to the anhydride (I), if appropriate as a mixture with the excess anhydride (I); and
- in a second stage, the said partial cyclization product is used in a polycondensation and/or polyaddition reaction with at least one compound (III) as defined in one of Claims 1 and 6 to 17.

**30.** Process according to Claim 21, **characterized in that**:

- at least one compound (I), at least one compound (II) and at least one compound (III) chosen from polyols, epoxy compounds and polyamines, and optionally polyacids. and cyclic anhydrides, are reacted in the absence of solvent, with a stoichiometric excess of the compound(s) (I) with respect to the compound(s) (II), at a temperature of 180°C-200°C, which is reached stepwise or directly or gradually, the water of condensation being removed, if appropriate, then,
- if appropriate, the mixture is brought to a temperature of less than 160°C, at least one polyisocyanate (III) is added and the reaction is carried out at this temperature.

**31.** Process according to Claim 21, **characterized in that**:

- at least one compound (I) and at least one compound (II) are reacted, with a stoichiometric excess of the compound(s) (I) with respect to the compound(s) (II), in the absence of solvent at a temperature of 20-150°C for 1 to 3 hours,
- then at least one compound (III), chosen from polyols, epoxy compounds and polyamines, and optionally polyacids and cyclic anhydrides, is added and the reaction mixture is brought to a temperature of 180°C-200°C, which is reached stepwise or directly or gradually, the water of condensation being removed, if appropriate, then,
- if appropriate, the mixture is brought to a temperature of less than 160°C, at least one polyisocyanate (III) is added and the reaction. is carried out at this temperature.

**32.** Process according to Claim 21, **characterized in that** at least one compound (I), at least one compound (II) and, as compounds (III), at least one polyisocyanate and at least one polyacid, and optionally at least one from polyols, epoxy compounds and polyamines, are reacted in the absence of solvent, with a stoichiometric excess of the compound(s) (I) with respect to the compound(s) (II), at a temperature of less than 160°C.

**33.** Process according to one of Claims 21 to 32, **characterized in that** the product obtained is modified, in order to decrease its acid number, by reaction with a monoepoxy compound at a temperature of 110 to 150°C.

**34.** Polymerizable and/or crosslinkable compositions comprising at least one prepolymer as defined in one of Claims 1 to 20 or prepared by the process as defined in one of Claims 21 to 33.

**35.** Polymerizable and/or crosslinkable compositions according to Claim 34, **characterized in that** they can be polymerized and/or crosslinked by the radical route, it being possible for the radicals to be generated by the thermal route and/or by the UV or visible irradiation route or by the electron beam route.

**36.** Products obtained by polymerization and/or crosslinking of the compositions as defined in either of Claims 34 and 35.

**Patentansprüche**

**1.** Prepolymere mit Maleinimidfunktionen (f):

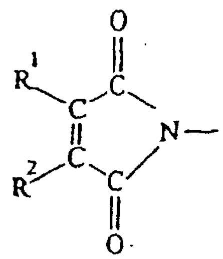

(f)

worin $R^1$ und $R^2$ jeweils unabhängig voneinander für H, $C_1$-$C_{12}$-Alkyl oder Halogen stehen, bei denen es sich um Reaktionsprodukte aus

- mindestens einer Verbindung der Formel (I) :

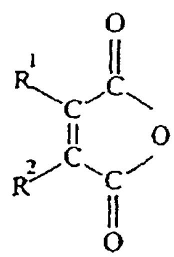

(I)

worin $R^1$ und $R^2$ die oben angegebene Bedeutung besitzen;

- mindestens einer Verbindung (II) mit einer $-NH_2$-Funktion und einer oder mehreren, gleichen oder verschiedenen, unter -OH, $-NH_2$, -NH-, -COOH,

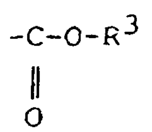

oder

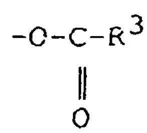

,

worin $R^3$ für einen $C_1$-$C_5$-Alkylrest steht, ausgewählten Funktionen F;

- mindestens einer Verbindung (III) zur Bildung der Kette der Prepolymere durch Polykondensation und/oder Polyaddition

handelt, wobei die Verbindung bzw. Verbindungen (II) zunächst zur Öffnung der entsprechenden Maleinsäureanhydridringe mit der Verbindung bzw. den Verbindungen (I) unter Bildung von entsprechenden Maleinamidsäurefunktionen (f'):

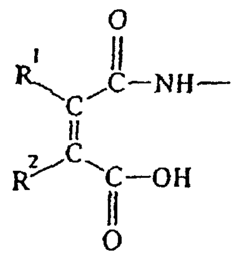

(f')

umgesetzt worden ist bzw. sind und die Maleinamidsäurefunktionen danach unter Einwirkung von Wärme unter Bildung der entsprechenden, durch mit einer Funktion F funktionalisierte Gruppen N-substituierten Maleinimide teilweise wieder geschlossen worden sind,
die Ketten der Prepolymere durch Polykondensation und/oder Polyaddition:

- des gebildeten N-substituierten Maleinimids mit der Funktion F;
- der Verbindung bzw. Verbindungen (III);
- der gleichzeitig mit den N-substituierten Maleinimiden gebildeten, nicht cyclisierten Produkte, die gegebenenfalls eine Funktion F tragen;
- der Verbindung bzw. Verbindungen (I), die nach ihrer Öffnung durch die Verbindung bzw. Verbindungen (II) im Überschuß vorgelegen haben können,

gebildet worden sind; wobei die Funktionalitäten der Verbindung bzw. Verbindungen (III) so gewählt sind, daß die Kette mit direkter Anbindung der N-substituierten Maleinimide an die Kette über ihre Funktion F, wenn es sich dabei um mindestens eine der Gruppen -OH, $-NH_2$, -NH- und COOH handelt, oder nach Umesterung der Funktionen F, wenn es sich dabei um $-COOR^3$ oder $-OCOR^3$ handelt, zwecks Ermöglichung der Kondensation oder Addition des N-substituierten Maleinimids an die Kette aufgebaut werden kann,
wobei die Funktionalitäten und Anteile der Verbindungen (II) und (III) so gewählt worden sind, daß keine Gelierung des Reaktionsgemischs auftritt und das zahlenmittlere Molekulargewicht (Mn) des erhaltenen Prepolymers zwischen 350 und 5000 liegt.

2. Prepolymere nach Anspruch 1, **dadurch gekennzeichnet, daß** die Verbindung bzw. Verbindungen (II) mit dem Anhydrid bzw. den Anhydriden (I) unter stöchiometrischen Bedingungen oder mit einem Überschuß des Anhydrids bzw. der Anhydride (I) gegenüber der Verbindung bzw. den Verbindungen (II) umgesetzt worden ist bzw. sind.

3. Prepolymere nach Anspruch 1 oder 2, **dadurch gekennzeichnet, daß** es sich bei der Verbindung der Formel (I) um Maleinsäureanhydrid handelt.

4. Prepolymere nach einem der Ansprüche 1 bis 3, **dadurch gekennzeichnet, daß** die Verbindung (II) unter den Verbindungen der Formeln $H_2N-A-OH$, $H_2N-A-COOH$, $H_2N-A-COOR^3$,

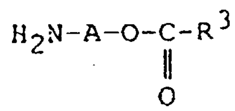

und $H_2N-A-NH_2$, worin A für einen linearen, verzweigten oder cyclischen Alkylenrest oder einen Arylenrest, wobei diese Reste durch Sauerstoff- oder Schwefelatome oder Gruppen $-NR^4-$, worin $R^4$ für Wasserstoff oder Alkyl steht, unterbrochen sein können, steht, ausgewählt ist.

5. Prepolymere nach Anspruch 4, **dadurch gekennzeichnet, daß** die Verbindung (II) unter Aminoalkoholen, Aminosäuren, Aminosäuremethyloder -ethylestern, Estern von $C_2$-$C_5$-Carbonsäuren mit Aminoalkoholen, Diaminen, polyethoxylierten und/oder polypropoxylierten Di- oder Triaminen und L-Serin, 3-Hydroxy-4-aminobenzoesäure, 3-Amino-4-hydroxybenzoesäure, N-(2-Aminoethyl)-1,2-ethandiamin und N-(3-Aminopropyl)-1,3-propandiamin ausgewählt ist.

**6.** Prepolymere nach einem der Ansprüche 1 bis 5, **dadurch gekennzeichnet, daß** es sich dann, wenn das N-substituierte Maleinimid eine Funktion F, bei der es sich um -OH, $-NH_2$ oder -NH- handelt, enthält, bei den Verbindungen (III) um:

- mindestens ein Polyisocyanat und gegebenenfalls mindestens eine Polysäure und/oder ein cyclisches Anhydrid und
- mindestens ein Polyisocyanat und/oder mindestens eine Polysäure und/oder ein cyclisches Anhydrid und mindestens eine unter einem Polyol, einem mono- oder polyfunktionellen Epoxid und einem Polyamin ausgewählte Verbindung

handelt.

**7.** Prepolymere nach einem der Ansprüche 1 bis 6, **dadurch gekennzeichnet, daß** es sich dann, wenn das N-substituierte Maleinimid eine Funktion F, bei der es sich um -COOH handelt, enthält, bei den Verbindungen (III) um:

- mindestens eine unter einem Polyol, einem monooder polyfunktionellen Epoxid oder einem Polyamin ausgewählte Verbindung und
- gegebenenfalls eine Polysäure und/oder ein cyclisches Anhydrid und/oder ein Polyisocyanat oder

- mindestens ein Polyisocyanat und
- gegebenenfalls mindestens eine unter einem Polyol, einem mono- oder polyfunktionellen Epoxid, einer Polysäure und/oder einem cyclischen Anhydrid und einem Polyamin ausgewählte Verbindung

handelt.

**8.** Prepolymere nach einem der Ansprüche 1 bis 7, **dadurch gekennzeichnet, daß** es sich dann, wenn das N-substituierte Maleinimid eine Funktion F, bei der es sich um

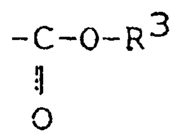

handelt, enthält, bei den Verbindungen (III) um:

- mindestens eine der Umesterung zugängliche Verbindung mit einer -OH-Funktion und mindestens einer anderen, unter -OH, -NH- und -COOH ausgewählten Funktion und
- in dem Fall, daß es sich bei dieser anderen Funktion um -OH oder -NH- handelt, die Verbindungen (III) gemäß der in Anspruch 6 angegebenen Definition und
- in dem Fall, daß es sich bei dieser anderen Funktion um -COOH handelt, die Verbindungen (III) gemäß der in Anspruch 7 angegebenen Definition

handelt.

**9.** Prepolymere nach einem der Ansprüche 1 bis 8, **dadurch gekennzeichnet, daß** es sich dann, wenn das N-substituierte Maleinimid eine Funktion F, bei der es sich um

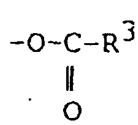

handelt, enthält, bei den Verbindungen (III) um:

- mindestens eine der Umesterung zugängliche Verbindung mit einer Säurefunktion und mindestens einer anderen, unter -OH, -NH- und -COOH ausgewählten Funktion und

- in dem Fall, daß es sich bei dieser anderen Funktion um -OH oder -NH- handelt, die Verbindungen (III) gemäß der in Anspruch 6 angegebenen Definition und
- in dem Fall, daß es sich bei dieser anderen Funktion um -COOH handelt, die Verbindungen (III) gemäß der in Anspruch 7 angegebenen Definition

handelt.

**10.** Prepolymere nach einem der Ansprüche 6 bis 9, **dadurch gekennzeichnet, daß** die als Verbindungen (III) dienenden Polyole unter Propylenglykol, Dipropylenglykol, Diethylenglykol, Ethylenglykol; 1,3-Butandiol, 1,4-Butandiol, Neopentylglykol, Triethylenglykol, Tripropylenglykol, Butylenglykol, Glycerin, Trimethylolpropan, 1,6-Hexandiol, 1,4-Cyclohexandiol, 1,4-Cyclohexandimethanol, 2-Methyl-1,3-propandiol, 2-Butyl-2-ethyl-1,3-propandiol, 1,2-Bis(hydroxyethyl)cyclohexan, 4'-(2-Hydroxyethoxy)-2,2-dimethyl-2-hydroxyacetophenon, 2,2-Dimethyl-3-hydroxypropyl-2,2-dimethyl-3-hydroxypropionat und Dibromneopentylglykol sowie Polyetherpolyolen, Polyesterpolyolen und Polyurethanpolyolen mit einem gewichtsmittleren Molekulargewicht zwischen 200 und 1000 ausgewählt sind.

**11.** Prepolymere nach einem der Ansprüche 6 bis 9, **dadurch gekennzeichnet, daß** die als Verbindungen (III) dienenden Epoxidverbindungen unter Epichlorhydrin, 7-Oxabicyclo[4.1.0]-heptan, 3,4-Epoxycyclohexancarbonsäure-3,4-epoxycyclohexylmethylester, Diglycidylether von Bisphenol A, 1,2-Epoxyhexadecan, 3,3,3-Trichlorpropylenoxid und Allylglycidylether ausgewählt sind.

**12.** Prepolymere nach einem der Ansprüche 6 bis 9, **dadurch gekennzeichnet, daß** die als Verbindungen (III) dienenden Polyisocyanate unter 4,4'-Diphenylmethandiisocyanat, Trimethylhexametbylendiisocyanat, Toluoldiisocyanat, Isophorondiisocyanat, Tetramethylendiisocyanat, Pentamethylendiisocyanat, 4,4'-Dicyclohexylmethandiisocyanat, 2,2,4-Trimethylhexamethylen-1,6-diisocyanat, Triphenylmethan-4,4',4''-triisocyanat, Polymethylenpolyphenylisocyanat, m-Phenylendiisocyanat, p-Phenylendiisocyanat, 1,5-Naphthalindiisocyanat, Naphthalin-1,4-diisocyanat, Diphenylen-4,4'diisocyanat, 3,3'-Bitolylen-4,4'-diisocyanat, 1,4-Cyclohexylendimethylendiisocyanat, Xylylen-1,4-diisocyanat, Xylylen-1,3-diisocyanat, Cyclohexyl-1,4-diisocyanat und 3,3'-Dimethyldiphenylmethan-4,4'-diisocyanat sowie Prepolymeren vom Typ Polyharnstoff oder Polyurethan mit Isocyanat-Endgruppen und Polyisocyanaten, die in ihrem Molekül einen Isocyanuratring enthalten, sowie Biureten mit Isocyanat-Endgruppen ausgewählt sind.

**13.** Prepolymere nach einem der Ansprüche 6 bis 9, **dadurch gekennzeichnet, daß** die als Verbindungen (III) dienenden Polysäuren unter Maleinsäure, Fumarsäure, Chlormaleinsäure, Citräconsäure, Metaconsäure, Itaconsäure, Tetraconsäure, ortho-Phthalsäure, Isophthalsäure, Terephthalsäure, Bernsteinsäure, Methylbernsteinsäure, Adipinsäure, Sebacinsäure, Tetrabromphthalsäure, Tetrachlorphthalsäure, Glutarsäure, Pimelinsäure und Pyromellitsäure ausgewählt sind.

**14.** Prepolymere nach einem der Ansprüche 6 bis 9, **dadurch gekennzeichnet, daß** die als Verbindungen (III) dienenden cyclischen Anhydride unter Maleinsäureanhydrid, Bernsteinsäureanhydrid, Phthalsäureanhydrid, Trimellitsäureanhydrid, Pyromellitsäureanhydrid, Tetrahydrophthalsäureanhydrid, Hexahydrophthalsäureanhydrid, chlorierten Anhydriden, Methyltetrahydrophthalsäureanhydrid, 5-Norbornen-2,3-dicarbonsäureanhydrid, Methyl-5-norbornen-2,3-dicarbonsäureanhydrid, Itaconsäureanhydrid, Citraconsäureanhydrid und Glutarsäureanhydrid ausgewählt sind.

**15.** Prepolymere nach einem der Ansprüche 6 bis 9, **dadurch gekennzeichnet, daß** die als Verbindungen (III) dienenden Polyamine unter Ethylendiamin, 2-Methyl-1,5-pentamethylendiamin, Trimethylhexan-1,6-diamin, Hexamethylendiamin, 2,2,4- und/oder 2,4,4-Trimethylhexamethylendiamin, Dodecamethylendiamin, Trimethylhexamethylendiamin, 5-Methylnonamethylendiamin, Decamethylendiamin, Isophorondiamin, Bis(4-Aminocyclohexyl)methan, Bis(3-methyl-4-aminocyclohexyl)methan, Bis(3-Methyl-4-amino-5-ethylcyclohexyl)methan, 1,2-Bis(4-aminocyclohexyl)ethan, 2,2'-Bis(4-aminocyclohexyl)propan und 2,2'-Bis(3-methyl-4-aminocyclohexyl)propan ausgewählt sind.

**16.** Prepolymere nach einem der Ansprüche 6 bis 9, **dadurch gekennzeichnet, daß** die der Umesterung zugänglichen Verbindungen (III) mit einer OH-Funktion und mindestens einer anderen, unter -OH, -NH- und -COOH ausgewählten Funktion unter 2-Hydroxybenzolessigsäure, para-Hydroxybenzoesäure, meta-Hydroxybenzoesäure, 2-Hydroxy-3-methylbenzoesäure, 2-Hydroxy-4-methylbenzoesäure, 2-Hydroxy-5-methylbenzoesäure, 2-(Butylamino) ethanol, 2-(Cyclohexylamino)ethanol, 2-(Phenylamino)ethanol, 3-Hydroxypiperidin, 4-Hydroxypiperidin, Dipropylenglykol, Tripropylenglykol, Triethylenglykol, 1,6-Hexandiol, 1,4 Cyclohexandiol, 1,4-Cyclohexandimethanol, 2 Butyl-2-ethyl-1,3-propandiol und 1,2-Bis(hydroxyethyl)cyclohexan ausgewählt sind.

**17.** Prepolymere nach einem der Ansprüche 6 bis 9, **dadurch gekennzeichnet, daß** die der Umesterung zugänglichen Verbindungen (III) mit einer Säurefunktion und mindestens einer anderen, unter -OH, -NH- und -COOH ausgewählten Funktion unter 2-Hydroxybenzolessigsäure, para-Hydroxybenzoesäure, meta-Hydroxybenzoesäure, 2-Hydroxy-3-methylbenzoesäure, 2-Hydroxy-4-methylbenzoesäure, 2-Hydroxy-5-methylbenzoesäure, N-Methylglycin, 2-Methylaminobenzoesäure, ortho-Phthalsäure, Terephthalsäure, Isophthalsäure, Adipinsäure, Pimelinsäure, Sebacinsäure, Tetrabromphthalsäure und Tetrachlorphthalsäure ausgewählt sind.

**18.** Prepolymere nach einem der Ansprüche 1 bis 17, **dadurch gekennzeichnet, daß** ihr zahlenmittleres Molekulargewicht ($\overline{Mn}$) zwischen 500 und 3000 liegt.

**19.** Prepolymere nach einem der Ansprüche 1 bis 18, **dadurch gekennzeichnet, daß** sie 0,02 bis 5 mol Maleinimidgruppen pro kg Prepolymer enthalten.

**20.** Prepolymere nach einem der Ansprüche 1 bis 19, **dadurch gekennzeichnet, daß** ihre endständigen Säurefunktionen nach ihrer Bildung zur Regulierung der Säurezahl mit einer Monöepoxidverbindung umgesetzt worden sind.

**21.** Verfahren zur Herstellung von Prepolymeren nach einem der Ansprüche 1 bis 20, **dadurch gekennzeichnet, daß** man mindestens eine Verbindung (I), mindestens eine Verbindung (II) und mindestens eine Verbindung. (III), wobei die Verbindungen (I), (II) und (III) wie in einem der Ansprüche 1 und 3 bis 17 definiert sind, unter Bedingungen umsetzt, bei denen die Verbindung bzw. Verbindungen (II) zunächst zur Öffnung der entsprechenden Maleinsäureanhydridringe mit der Verbindung bzw. den Verbindungen (I) reagieren kann bzw. können, wobei sich durch Öffnung dieser Maleinsäureanhydridringe durch die primäre Aminfunktion der Verbindung bzw. Verbindungen (II) die entsprechenden Maleinamidsäurefunktionen bilden, die dann durch Erhitzen teilweise wieder zu Maleinimidringen geschlossen werden, wobei die so gebildeten entsprechenden Maleinimide mit der bzw. den Verbindungen (III) reagieren und die Kette des Prepolymers durch Polykondensationsund/oder Polyadditionsreaktionen unter Beteiligung der Verbindung bzw. den Verbindungen (III) und/oder in dem Fall, daß die Verbindung bzw. Verbindungen (I) nach Öffnung von (I) durch (II) im Überschuß verbleiben, des Überschusses der Verbindungen (I) gebildet wird, wobei die nicht cyclisierten Produkte ebenfalls in die Zusammensetzung der Kette eingehen, wobei die Funktionalitäten und Anteile der Verbindungen (II) und (III) so gewählt worden sind, daß keine Gelierung des Reaktionsgemischs auftritt.

**22.** Verfahren nach Anspruch 21, **dadurch gekennzeichnet, daß** man:

- in einem ersten Schritt mindestens eine Verbindung (I) zur Öffnung der Anhydridringe in einem polaren Lösungsmittelmedium unter stöchiometrischen Bedingungen mit mindestens einer Verbindung (II) umsetzt;

- in einem zweiten Schritt nach Verdampfen des polaren Lösungsmittels und gegebenenfalls Zusatz mindestens einer Polysäure und/oder eines cyclischen Anhydrids als Verbindung (III) zum Reaktionsgemisch durch Erhitzen des Reaktionsgemischs aus dem ersten Schritt eine Cyclisierungsreaktion durchführt, durch die die im vorhergehenden Schritt geöffneten Maleinsäureanhydridringe teilweise wieder geschlossen werden, wobei man ein Teilcyclisierungsprodukt erhält, das dann, wenn man in Abwesenheit von cyclischem Anhydrid (III) gearbeitet hat, durch je nach verwendeter Verbindung (II) bzw. verwendeten Verbindungen (II) mit -OH oder -COOH oder

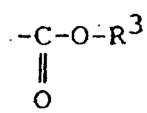

oder

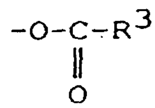

oder $-NH_2$ oder -NH funktionalisierte Gruppen N-substituierte Maleinimide enthält, oder dann, wenn man in Gegenwart von cyclischem Anhydrid (III) gearbeitet hat, durch mit -COOH oder je nach Ausgangsverbindung (II) mit OH oder $NH_2$ oder NH oder

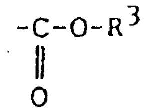

oder

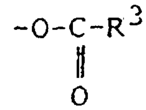

funktionalisierte Gruppen N-substituierte Maleinimide enthält, wobei sich die dem cyclischen Anhydrid (III) entsprechende Disäure bildet, gegebenenfalls im Gemisch mit dem Überschuß an nicht abreagiertem Anhydrid (III) oder (I); und

- in einem dritten Schritt das Teilcyclisierungsprodukt in einer Polykondensations- und/oder Polyadditionsreaktion mit mindestens einer Verbindung (III) gemäß einem der Ansprüche 1 und 6 bis 17 verwendet.

**23.** Verfahren nach Anspruch 22, **dadurch gekennzeichnet, daß** man den ersten Schritt bei einer Temperatur von 0 bis 80°C. über einen Zeitraum von 1 bis 10 Stunden in einem polaren Lösungsmittel durchführt.

**24.** Verfahren nach Anspruch 22 oder 23, **dadurch gekennzeichnet, daß** man den zweiten Schritt in Gegenwart von cyclischem Anhydrid bei einer Temperatur von 40 bis 160°C über einen Zeitraum von 0,5 bis 10 Stunden gegebenenfalls in einem aprotischen Lösungsmittel und/oder in Gegenwart eines Cyclisierungskatalysators durchführt.

**25.** Verfahren nach Anspruch 22 oder 23, **dadurch gekennzeichnet, daß** man den zweiten Schritt in Abwesenheit von Anhydrid bei einer Temperatur von 40 bis 160°C über einen Zeitraum von 0,5 bis 10 Stunden in der im ersten Schritt erhaltenen Amidsäure als Lösungsmittel und gegebenenfalls in Gegenwart eines Cyclisierungskatalysators durchführt.

**26.** Verfahren nach einem der Ansprüche 22 bis 25, **dadurch gekennzeichnet, daß** man im Fall einer Polykondensation mit mindestens einem Polyol oder einem Epoxid und gegebenenfalls mit einer Polysäure oder einem Anhydrid den dritten Schritt bei einer Temperatur von 150 bis 250°C gegebenenfalls in Gegenwart mindestens eines Veresterungskatalysators und/oder mindestens eines Inhibitors der radikalischen Polymerisation durchführt.

**27.** Verfahren nach einem der Ansprüche 22 bis 25, **dadurch gekennzeichnet, daß** man im Fall einer Umsetzung mit einem Polyisocyanat und gegebenenfalls mit mindestens einer Polysäure und/oder einem Polyol und/oder einem Epoxid, wobei ein Anhydrid zugegen sein kann, wenn auch ein Polyol zugegen ist, den dritten Schritt bei einer Temperatur von 20 bis 200°C durchführt, wobei die Additionsreaktion zwischen der Polysäure oder dem Polyol mit dem Polyisocyanat in Gegenwart eines Katalysators erfolgen kann.

**28.** Verfahren nach einem der Ansprüche 22 bis 27, **dadurch gekennzeichnet, daß** man in einer vorgeschalteten Stufe die Doppelbindung

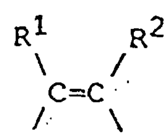

der Verbindung (I) durch Umsetzung mit einem unter Furan, Furanderivaten, Cyclopentadien und Cyclopentadienderivaten ausgewählten Schutzreagenz schützt, wobei die Entschützung ab dem zweiten Schritt durch Einwirkung von Wärme erfolgt.

**29.** Verfahren nach Anspruch 21, **dadurch gekennzeichnet, daß** man:

- in einem ersten Schritt in polarem Lösungsmittelmedium bei einer Temperatur von 20 bis 150°C mindestens eine Verbindung (I) mit mindestens einer Verbindung (II) unter Verwendung eines stöchiometrischen Überschusses der Verbindung bzw. Verbindungen (I) gegenüber der Verbindung bzw. den Verbindungen (II) zu einem Teilcyclisierungsprodukt, das durch -COOH oder

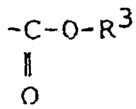

oder

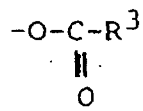

  funktionalisierte N-substituierte Maleinimide, Produkte der Öffnung der Verbindung bzw. Verbindungen (I) und die der Verbindung (I) entsprechende Disäure enthält, gegebenenfalls im Gemisch mit dem Überschuß an Verbindung (I), umsetzt und

- in einem zweiten Schritt das. Teilcyclisierungsprodukt in einer Polykondensations- und/oder Polyadditionsreaktion mit mindestens einer Verbindung (III) gemäß einem der Ansprüche 1 und 6 bis 17 verwendet.

**30.** Verfahren nach Anspruch 21, **dadurch gekennzeichnet, daß** man:

- mindestens eine Verbindung (I), mindestens eine Verbindung (II) und mindestens eine Verbindung (III), die unter Polyolen, Epoxiden und Polyaminen und gegebenenfalls Polysäuren und cyclischen Anhydriden ausgewählt ist, ohne Lösungsmittel bei einem stöchiometrischen Überschuß der Verbindung bzw. Verbindungen (I) gegenüber der Verbindung bzw. den Verbindungen (II) bei einer Temperatur von 180°C bis 200°C, die schrittweise, direkt oder allmählich erreicht wird, umsetzt, gegebenenfalls unter Entfernung des Kondensationswassers, und dann

- gegebenenfalls das Gemisch auf eine Temperatur unter 160°C bringt, mindestens ein Polyisocyanat (III) zusetzt und die Umsetzung bei dieser Temperatur durchführt.

**31.** Verfahren nach Anspruch 21, **dadurch gekennzeichnet, daß** man:

- mindestens eine Verbindung (I) und mindestens eine Verbindung (II) bei einem stöchiometrischen Überschuß der Verbindung bzw. Verbindungen (I) gegenüber der Verbindung bzw. den Verbindungen (II) ohne Lösungsmittel bei einer Temperatur von 20 bis 150°C über einen Zeitraum von 1 bis 3 Stunden umsetzt, dann

- mindestens eine Verbindung (III), die unter Polyolen, Epoxiden und Polyaminen und gegebenenfalls Polysäuren und cyclischen Anhydriden ausgewählt ist, zusetzt und das Reaktionsgemisch auf eine Temperatur von 180°C bis 200°C bringt, die schrittweise, direkt oder allmählich erreicht wird, gegebenenfalls unter Entfernung des Kondensationswassers, und dann

- gegebenenfalls das Gemisch auf eine Temperatur unter 160°C bringt, mindestens ein Polyisocyanat (III) zusetzt und die Umsetzung bei dieser Temperatur durchführt.

**32.** Verfahren nach Anspruch 21, **dadurch gekennzeichnet, daß** man mindestens eine Verbindung (I), mindestens eine Verbindung (II) und als Verbindung (III) mindestens ein Polyisocyanat und mindestens eine Polysäure und gegebenenfalls mindestens eine unter Polyolen, Epoxiden und Polyaminen ausgewählte Verbindung ohne Lösungsmittel bei einem stöchiometrischen Überschuß der Verbindung bzw. Verbindungen (I) gegenüber der Verbindung bzw. den Verbindungen (II) bei einer Temperatur unter 160°C umsetzt.

**33.** Verfahren nach einem der Ansprüche 21 bis 32, **dadurch gekennzeichnet, daß** man das erhaltene Produkt zur Verringerung der. Säurezahl durch Umsetzung mit einem Monoepoxid bei einer Temperatur von etwa 110 bis 150°C modifiziert.

**34.** Polymerisierbare und/oder vernetzbare Zusammensetzungen, enthaltend mindestens ein nach einem der Ansprüche 1 bis 20 definiertes oder nach einem Verfahren nach einem der Ansprüche 21 bis 33 hergestelltes Prepolymer.

35. Polymerisierbare und/oder vernetzbare Zusammensetzungen nach Anspruch 34, **dadurch gekennzeichnet, daß** sie radikalisch polymerisierbar und/oder vernetzbar sind, wobei die Radikale thermisch und/oder durch Bestrahlung mit UV oder sichtbarem Licht oder mittels Elektronenstrahlen erzeugt werden können.

36. Durch Polymerisation und/oder Vernetzung der Zusammensetzungen nach Anspruch 34 oder 35 erhaltene Produkte.